# EUROPEAN PATENT APPLICATION

(11) **EP 4 212 021 A1**
(43) Date of publication of application: **19.07.2023**
(21) Application number: 21866875.4
(22) Date of filing: 10.09.2021
(51) Int. Cl.: A23F 5/24, A23L 7/109, A23L 27/00, A23L 27/60, C11B 9/00

(54) **PERFUME COMPOSITION**

(30) Priority: 11.09.2020 JP 2020152965
(71) Applicant: AJINOMOTO CO., INC., Chuo-ku Tokyo 104-8315 (JP)
(72) Inventor: SAKAMOTO, Kazuhiro, Kawasaki-shi, Kanagawa 210-8681 (JP); KITAJIMA, Seiji, Kawasaki-shi, Kanagawa 210-8681 (JP); MIURA, Yoshimasa, Kawasaki-shi, Kanagawa 210-8681 (JP); TOHO, Yuki, Kawasaki-shi, Kanagawa 210-8681 (JP); NAKAGAWA, Waki, Kawasaki-shi, Kanagawa 210-8681 (JP); MIKOSHIBA, Naoki, Kawasaki-shi, Kanagawa 210-8681 (JP)
(74) Representative: Strehl Schübel-Hopf & Partner
(86) International application number: PCT/JP2021/033378
(87) International publication number: WO 2022/054918

(57) **Abstract**

The present invention aims to provide a flavoring composition capable of effectively enhancing a mouth-coating feel and the like.

The present invention relates to a flavoring composition containing at least two compounds selected from the group consisting of (A) a compound represented by the formula (I): 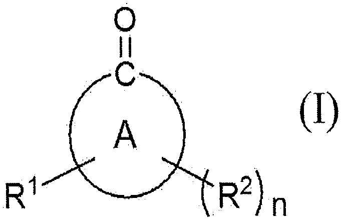 wherein each symbol is as defined in the present specification, (B) β-caryophyllene oxide, and (C) a compound represented by the formula (II): 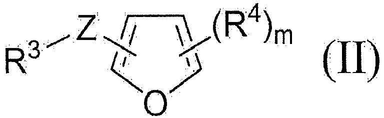 wherein each symbol is as defined in the present specification.

## Description

### [Technical Field]

The present invention relates to a flavoring composition. More particularly, it relates to a flavoring composition preferably used for enhancing a mouth-coating feel. In addition, the present invention relates to a food and a production method thereof, more particularly, a food with an enhanced mouth-coating feel and a production method thereof. The present invention further relates to a method for enhancing a mouth-coating feel.

### [Background Art]

The "mouth-coating feel" is the sensation that the oral cavity is covered with a thin film, the sensation that the oral cavity is covered with oil or fat, or an oil or fat-like film, a smooth sensation that is felt in the oral cavity, and an oil or fat-like rich sensation (thickness) that spreads throughout the oral cavity, each of which is noticeably felt when a oil or fat, or a solution or food containing oil or fat is contained in the oral cavity. If there is a method that can easily enhance the mouth-coating feel, for example, even a small amount of oil or fat can sufficiently provide a favorable sensation that is noticeably felt when oil, fat, or the like is contained in the oral cavity. Thus, the method is considered to afford advantages such as suppression of excessive calorie intake, expected effect in preventing metabolic diseases such as obesity, and the like.

Conventionally, as a method for enhancing the mouth-coating feel, methods utilizing hydrocolloids, low-molecular-weight compounds, polyphenols or glycosides (non-patent documents 1 to 5) and the like have been reported. However, there is a problem that the sensation enhanced by any of these methods is different in quality from the mouth-coating feel that is noticeably felt when oil, fat or the like is contained in the oral cavity.

On the other hand, it has been reported that a stewed food-like flavor can be imparted by adding cyclotene, isovaleric acid, and octanoic acid to a food (Patent Literature 1).

### [Citation List]

### [Patent Literature]

[PTL 1]
WO 2014/142267

### [Non Patent Literature]

[NPL 1]
   Arocas et al., "Sensory properties determined by starch type in white sauces: effects of freeze/thaw and hydrocolloid addition." J Food Sci 2010, 75:S132-S140.
[NPL 2]
   Flett et al., "Perceived creaminess and viscosity of aggregated particles of casein micelles and κ-carrageenan." J Food Sci 2010, 75:S255-S261.
[NPL 3]
   Dawid et al., "Identification of sensory-active phytochemicals in asparagus (Asparagus officinalis L.)." J Agric Food Chem 2012, 60:11877-11888.
[NPL 4]
   Schwarz et al., "Identification of novel orosensory active molecules in cured vanilla beans (Vanilla planifolia)." J Agric and Food Chem 2009, 57:3729-3737.
[NPL 5]
   Scharbert et al., "Identification of the astringent taste compounds in black tea infusions by combining instrumental analysis and human bioresponse." J Agric and Food Chem 2004, 52:3498-3508.

### [Summary of Invention]

### [Technical Problem]

The present invention has been made in view of the aforementioned situation, and the problem to be solved thereby is provision of a flavoring composition that can effectively enhance a mouth-coating feel, a food with an effectively enhanced mouth-coating feel and a production method thereof, a method for effectively enhancing a mouth-coating feel, and the like.

### [Solution to Problem]

The present inventors have conducted intensive studies of the above-mentioned problems and found that the mouth-coating feel can be enhanced by adding at least two compounds selected from the group consisting of (A) a compound represented by the following formula (I) (e.g., cyclotene, etc.), (B) β-caryophyllene oxide, and (C) a compound represented by the following formula (II) (e.g., furfural, etc.) to a food. The present inventors have conducted further studies based on such finding and completed the present invention.

That is, the present invention provides the following.
[1] A flavoring composition comprising at least two compounds selected from the group consisting of
   (A) a compound represented by the formula (I):

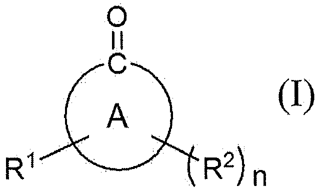

      wherein
      ring A is a 5-membered or 6-membered, saturated or unsaturated, carbocycle or oxygen-containing or nitrogen-containing heterocycle;
      R¹ is an oxo group, a hydroxy group, an alkoxy group having 1 - 4 carbon atoms, an acyloxy group having 1 - 4 carbon atoms, a hydrocarbon group having 1 - 8 carbon atoms and optionally having substituent(s), or a hydrogen atom, and when R¹ is a hydrocarbon group having 1 - 8 carbon atoms and optionally having substituent(s), a carbon atom in the hydrocarbon group may be bonded to a carbon atom of ring A to form a crosslinked structure or a saturated or unsaturated ring structure;
      R² is a hydrocarbon group having 1 - 8 carbon atoms, a hydroxy group, or a hydrogen atom; and
      n is an integer of 1 to 3,
   (B) β-caryophyllene oxide, and
   (C) a compound represented by the formula (II):

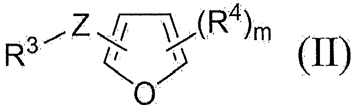

      wherein
      R³ is an acyl group having 1 - 6 carbon atoms, a hydroxy group, a pyrrole group, or an acyloxy group having 1 - 6 carbon atoms;
      Z is a single bond or an alkylene group having 1 - 6 carbon atoms;
      R⁴ is a substituent; and
      m is an integer of 0 to 3.
[2] The composition of [1], wherein the aforementioned (A) is at least one compound selected from the group consisting of cyclotene, γ-butyrolactone, 2-methyltetrahydrofuran-3-one, α-angelicalactone, maltol, 3-methyl-1,2-cyclohexanedione, γ-dodecanolactone, 5-dodecanolide, 4,5-dimethyl-3-hydroxy-2,5-dihydrofuran-2-one, and D-camphor.
[3] The composition of [1] or [2], wherein the aforementioned (C) is at least one compound selected from the group consisting of furfural, 2-acetylfuran, 2-acetyl-5-methylfuran, 3-acetyl-2,5-dimethylfuran, furfuryl alcohol, 1-furfurylpyrrole, furfuryl propionate, 5-methylfurfural, and 5-(hydroxymethyl)furfural.
[4] The composition of any one of [1] to [3], wherein the aforementioned at least two compounds selected from the group consisting of (A), (B), and (C) are any of the following (i) to (xviii):
   (i) at least two compounds selected from the group consisting of (A) cyclotene, (B) β-caryophyllene oxide, and (C) furfural
   (ii) at least two compounds selected from the group consisting of (A) γ-butyrolactone, (B) β-caryophyllene oxide, and (C) furfural
   (iii) at least two compounds selected from the group consisting of (A) 2-methyltetrahydrofuran-3-one, (B) β-caryophyllene oxide, and (C) furfural
   (iv) at least two compounds selected from the group consisting of (A) α-angelicalactone, (B) β-caryophyllene oxide, and (C) furfural
   (v) at least two compounds selected from the group consisting of (A) maltol, (B) β-caryophyllene oxide, and (C) furfural
   (vi) at least two compounds selected from the group consisting of (A) 3-methyl-1,2-cyclohexanedione, (B) β-caryophyllene oxide, and (C) furfural
   (vii) at least two compounds selected from the group consisting of (A) γ-dodecanolactone, (B) β-caryophyllene oxide, and (C) furfural
   (viii) at least two compounds selected from the group consisting of (A) 5-dodecanolide, (B) β-caryophyllene oxide, and (C) furfural
   (ix) at least two compounds selected from the group consisting of (A) 4,5-dimethyl-3-hydroxy-2,5-dihydrofuran-2-one, (B) β-caryophyllene oxide, and (C) furfural
   (x) at least two compounds selected from the group consisting of (A) D-camphor, (B) β-caryophyllene oxide, and (C) furfural
   (xi) at least two compounds selected from the group consisting of (A) cyclotene, (B) β-caryophyllene oxide, and (C) 2-acetylfuran
   (xii) at least two compounds selected from the group consisting of (A) cyclotene, (B) β-caryophyllene oxide, and (C) 2-acetyl-5-methylfuran
   (xiii) at least two compounds selected from the group consisting of (A) cyclotene, (B) β-caryophyllene oxide, and (C) 3-acetyl-2,5-dimethylfuran
   (xiv) at least two compounds selected from the group consisting of (A) cyclotene, (B) β-caryophyllene oxide, and (C) furfuryl alcohol
   (xv) at least two compounds selected from the group consisting of (A) cyclotene, (B) β-caryophyllene oxide, and (C) 1-furfurylpyrrole
   (xvi) at least two compounds selected from the group consisting of (A) cyclotene, (B) β-caryophyllene oxide, and (C) furfuryl propionate
   (xvii) at least two compounds selected from the group consisting of (A) cyclotene, (B) β-caryophyllene oxide, and (C) 5-methylfurfural
   (xviii) at least two compounds selected from the group consisting of (A) cyclotene, (B) β-caryophyllene oxide, and (C) 5-(hydroxymethyl)furfural.
[5] The composition of any one of [1] to [4], wherein the aforementioned at least two compounds selected from the group consisting of (A), (B), and (C) are at least two compounds selected from the group consisting of (A) cyclotene, (B) β-caryophyllene oxide, and (C) furfural.
[6] The composition of any one of [1] to [5], wherein the composition is for enhancing a mouth-coating feel.
[7] The composition of any one of [1] to [6], comprising (A), (B), and (C).
[8] The composition of any one of [1] to [7], wherein
   when the composition comprises at least (A) and (B), a weight ratio of the content of (A) and the content of (B) (A:B) in the composition is A:B=1:0.001 to 1000;
   when the composition comprises at least (A) and (C), a weight ratio of the content of (A) and the content of (C) (A:C) in the composition is A:C=1:0.001 to 1000; and
   when the composition comprises at least (B) and (C), a weight ratio of the content of (B) and the content of (C) (B:C) in the composition is B:C=1:0.001 to 1000.
[9] The composition of any one of [1] to [8], wherein the composition comprises at least (A) and (B), and the weight ratio of the content of (A) and the content of (B) (A:B) in the composition is A:B=1:0.001 to 1000.
[10] The composition of any one of [1] to [9], wherein the composition comprises at least (A) and (C), and the weight ratio of the content of (A) and the content of (C) (A:C) in the composition is A:C=1:0.001 to 1000.
[11] The composition of any one of [1] to [10], wherein the composition comprises at least (B) and (C), and the weight ratio of the content of (B) and the content of (C) (B:C) in the composition is B:C=1:0.001 to 1000.
[12] The composition of any one of [1] to [11], wherein
   when the composition comprises at least (A), the composition is to be added to a food such that a concentration a of (A) in the food is 0.05 - 5000 weight ppb with respect to the total weight of the food to be eaten;
   when the composition comprises at least (B), the composition is to be added to a food such that a concentration b of (B) in the food is 0.1 - 50000 weight ppb with respect to the total weight of the food to be eaten; and
   when the composition comprises at least (C), the composition is to be added to a food such that a concentration c of (C) in the food is 0.1 - 50000 weight ppb with respect to the total weight of the food to be eaten.
[13] The composition of any one of [1] to [12], wherein the composition comprises at least (A) and is to be added to a food such that the concentration a of (A) in the food is 0.05 - 5000 weight ppb with respect to the total weight of the food to be eaten.
[14] The composition of any one of [1] to [13], wherein the composition comprises at least (B) and is to be added to a food such that the concentration b of (B) in the food is 0.1 - 50000 weight ppb with respect to the total weight of the food to be eaten.
[15] The composition of any one of [1] to [14], wherein the composition comprises at least (C) and is to be added to a food such that the concentration c of (C) in the food is 0.1-50000 weight ppb with respect to the total weight of the food to be eaten.
[16] The composition of any one of [1] to [15], wherein
   when the composition comprises at least (A) and (B), the composition is to be added to a food such that the weight ratio of the concentration a of (A) and the concentration b of (B) (a:b) is a:b=1:0.001 to 1000;
   when the composition comprises at least (A) and (C), the composition is to be added to a food such that the weight ratio of the concentration a of (A) and the concentration c of (C) (a:c) is a:c=1:0.001 to 1000; and
   when the composition comprises at least (B) and (C), the composition is to be added to a food such that the weight ratio of the concentration b of (B) and the concentration c of (C) (b:c) is b:c=1:0.001 to 1000.
[17] The composition of any one of [1] to [16], wherein the composition comprises at least (A) and (B), and is to be added to a food such that the weight ratio of the concentration a of (A) and the concentration b of (B) in the food (a:b) is a:b=1:0.001 to 1000.
[18] The composition of any one of [1] to [17], wherein the composition comprises at least (A) and (C), and is to be added to a food such that the weight ratio of the concentration a of (A) and the concentration c of (C) in the food (a:c) is a:c=1:0.001 to 1000.
[19] The composition of any one of [1] to [18], wherein the composition comprises at least (B) and (C), and is to be added to a food such that the weight ratio of the concentration b of (B) and the concentration c of (C) in the food (b:c) is b:c=1:0.001 to 1000.
[20] A method for producing a food, comprising adding at least two compounds selected from the group consisting of
   (A) a compound represented by the formula (I):

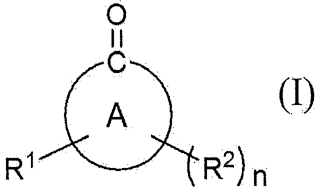

      wherein
      ring A is a 5-membered or 6-membered, saturated or unsaturated, carbocycle or oxygen-containing or.nitrogen-containing heterocycle;
      R¹ is an oxo group, a hydroxy group, an alkoxy group having 1 - 4 carbon atoms, an acyloxy group having 1 - 4 carbon atoms, a hydrocarbon group having 1 - 8 carbon atoms and optionally having substituent(s), or a hydrogen atom, and when R¹ is a hydrocarbon group having 1 - 8 carbon atoms and optionally having substituent(s), a carbon atom in the hydrocarbon group may be bonded to a carbon atom of ring A to form a crosslinked structure or a saturated or unsaturated ring structure;
      R² is a hydrocarbon group having 1 - 8 carbon atoms, a hydroxy group, or a hydrogen atom; and
      n is an integer of 1 to 3,
   (B) β-caryophyllene oxide, and
   (C) a compound represented by the formula (II):

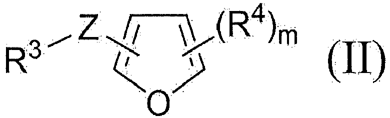

      wherein
      R³ is an acyl group having 1 - 6 carbon atoms, a hydroxy group, a pyrrole group, or an acyloxy group having 1 - 6 carbon atoms;
      Z is a single bond or an alkylene group having 1 - 6 carbon atoms;
      R⁴ is a substituent; and
      m is an integer of 0 to 3.
[21] The production method of [20], wherein the aforementioned (A) is at least one compound selected from the group consisting of cyclotene, γ-butyrolactone, 2-methyltetrahydrofuran-3-one, α-angelicalactone, maltol, 3-methyl-1,2-cyclohexanedione, γ-dodecanolactone, 5-dodecanolide, 4,5-dimethyl-3-hydroxy-2,5-dihydrofuran-2-one, and D-camphor.
[22] The production method of [20] or [21], wherein the aforementioned (C) is at least one compound selected from the group consisting of furfural, 2-acetylfuran, 2-acetyl-5-methylfuran, 3-acetyl-2,5-dimethylfuran, furfuryl alcohol, 1-furfurylpyrrole, furfuryl propionate, 5-methylfurfural, and 5-(hydroxymethyl)furfural.
[23] The production method of any one of [20] to [22], wherein the aforementioned at least two compounds selected from the group consisting of (A), (B), and (C) are any of the following (i) to (xviii):
   (i) at least two compounds selected from the group consisting of (A) cyclotene, (B) β-caryophyllene oxide, and (C) furfural
   (ii) at least two compounds selected from the group consisting of (A) γ-butyrolactone, (B) β-caryophyllene oxide, and (C) furfural
   (iii) at least two compounds selected from the group consisting of (A) 2-methyltetrahydrofuran-3-one, (B) β-caryophyllene oxide, and (C) furfural
   (iv) at least two compounds selected from the group consisting of (A) α-angelicalactone, (B) β-caryophyllene oxide, and (C) furfural
   (v) at least two compounds selected from the group consisting of (A) maltol, (B) β-caryophyllene oxide, and (C) furfural
   (vi) at least two compounds selected from the group consisting of (A) 3-methyl-1,2-cyclohexanedione, (B) β-caryophyllene oxide, and (C) furfural
   (vii) at least two compounds selected from the group consisting of (A) γ-dodecanolactone, (B) β-caryophyllene oxide, and (C) furfural
   (viii) at least two compounds selected from the group consisting of (A) 5-dodecanolide, (B) β-caryophyllene oxide, and (C) furfural
   (ix) at least two compounds selected from the group consisting of (A) 4,5-dimethyl-3-hydroxy-2,5-dihydrofuran-2-one, (B) β-caryophyllene oxide, and (C) furfural
   (x) at least two compounds selected from the group consisting of (A) D-camphor, (B) β-caryophyllene oxide, and (C) furfural
   (xi) at least two compounds selected from the group consisting of (A) cyclotene, (B) β-caryophyllene oxide, and (C) 2-acetylfuran
   (xii) at least two compounds selected from the group consisting of (A) cyclotene, (B) β-caryophyllene oxide, and (C) 2-acetyl-5-methylfuran
   (xiii) at least two compounds selected from the group consisting of (A) cyclotene, (B) β-caryophyllene oxide, and (C) 3-acetyl-2,5-dimethylfuran
   (xiv) at least two compounds selected from the group consisting of (A) cyclotene, (B) β-caryophyllene oxide, and (C) furfuryl alcohol
   (xv) at least two compounds selected from the group consisting of (A) cyclotene, (B) β-caryophyllene oxide, and (C) 1-furfurylpyrrole
   (xvi) at least two compounds selected from the group consisting of (A) cyclotene, (B) β-caryophyllene oxide, and (C) furfuryl propionate
   (xvii) at least two compounds selected from the group consisting of (A) cyclotene, (B) β-caryophyllene oxide, and (C) 5-methylfurfural
   (xviii) at least two compounds selected from the group consisting of (A) cyclotene, (B) β-caryophyllene oxide, and (C) 5-(hydroxymethyl)furfural.
[24] The production method of any one of [20] to [23], wherein the aforementioned at least two compounds selected from the group consisting of (A), (B), and (C) are at least two compounds selected from the group consisting of (A) cyclotene, (B) β-caryophyllene oxide, and (C) furfural.
[25] The production method of any one of [20] to [24], wherein the food is a food with an enhanced mouth-coating feel.
[26] The production method of any one of [20] to [25], comprising adding (A), (B), and (C).
[27] The production method of any one of [20] to [26], wherein
   when the method comprises adding at least (A), said (A) is added such that a concentration a of (A) in the food is 0.05 - 5000 weight ppb with respect to the total weight of the food to be eaten;
   when the method comprises adding at least (B), said (B) is added such that a concentration b of (B) in the food is 0.1 - 50000 weight ppb with respect to the total weight of the food to be eaten; and
   when the method comprises adding at least (C), said (C) is added such that a concentration c of (C) in the food is 0.1 - 50000 weight ppb with respect to the total weight of the food to be eaten.
[28] The production method of any one of [20] to [27], wherein the method comprises adding at least (A), and said (A) is added such that the concentration a of (A) in the food is 0.05 - 5000 weight ppb with respect to the total weight of the food to be eaten.
[29] The production method of any one of [20] to [28], wherein the method comprises adding at least (B), and said (B) is added such that the concentration b of (B) in the food is 0.1 - 50000 weight ppb with respect to the total weight of the food to be eaten.
[30] The production method of any one of [20] to [29], wherein the method comprises adding at least (C), and said (C) is added such that the concentration c of (C) in the food is 0.1 - 50000 weight ppb with respect to the total weight of the food to be eaten.
[31] The production method of any one of [20] to [30], wherein when the method comprises adding at least (A) and (B), said (A) and (B) are added such that the weight ratio of the concentration a of (A) and the concentration b of (B) (a:b) is a:b=1:0.001 to 1000;
   when the method comprises adding at least (A) and (C), said (A) and (C) are added such that the weight ratio of the concentration a of (A) and the concentration c of (C) (a:c) is a:c=1:0.001 to 1000; and
   when the method comprises adding at least (B) and (C), said (B) and (C) are added such that the weight ratio of the concentration b of (B) and the concentration c of (C) (b:c) is b:c=1:0.001 to 1000.
[32] The production method of any one of [20] to [31], wherein the method comprises adding at least (A) and (B), and said (A) and (B) are added such that the weight ratio of the concentration a of (A) and the concentration b of (B) in the food (a:b) is a:b=1:0.001 to 1000.
[33] The production method of any one of [20] to [32], wherein the method comprises adding at least (A) and (C), and said (A) and (C) are added such that the weight ratio of the concentration a of (A) and the concentration c of (C) in the food (a:c) is a:c=1:0.001 to 1000.
[34] The production method of any one of [20] to [33], wherein the method comprises adding at least (B) and (C), and said (B) and (C) are added such that the weight ratio of the concentration b of (B) and the concentration c of (C) in the food (b:c) is b:c=1:0.001 to 1000.
[35] A food comprising at least two compounds selected from the group consisting of
   (A) a compound represented by the formula (I): 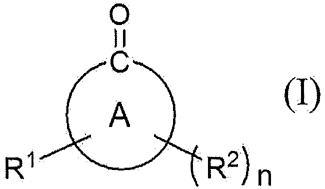 wherein
      ring A is a 5-membered or 6-membered, saturated or unsaturated, carbocycle or oxygen-containing or nitrogen-containing heterocycle;
      R¹ is an oxo group, a hydroxy group, an alkoxy group having 1 - 4 carbon atoms, an acyloxy group having 1 - 4 carbon atoms, a hydrocarbon group having 1 - 8 carbon atoms and optionally having substituent(s), or a hydrogen atom, and when R¹ is a hydrocarbon group having 1 - 8 carbon atoms and optionally having substituent(s), a carbon atom in the hydrocarbon group may be bonded to a carbon atom of ring A to form a crosslinked structure or a saturated or unsaturated ring structure;
      R² is a hydrocarbon group having 1 - 8 carbon atoms, a hydroxy group, or a hydrogen atom; and
      n is an integer of 1 to 3,
   (B) β-caryophyllene oxide, and
   (C) a compound represented by the formula (II):

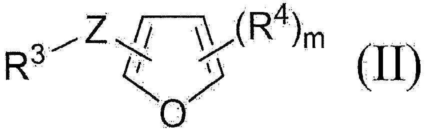

      wherein
      R³ is an acyl group having 1 - 6 carbon atoms, a hydroxy group, a pyrrole group, or an acyloxy group having 1 - 6 carbon atoms;
      Z is a single bond or an alkylene group having 1 - 6 carbon atoms;
      R⁴ is a substituent; and
      m is an integer of 0 to 3.
[36] The food of [35], wherein said (A) is at least one compound selected from the group consisting of cyclotene, γ-butyrolactone, 2-methyltetrahydrofuran-3-one, α-angelicalactone, maltol, 3-methyl-1,2-cyclohexanedione, γ-dodecanolactone, 5-dodecanolide, 4,5-dimethyl-3-hydroxy-2,5-dihydrofuran-2-one, and D-camphor.
[37] The food of [35] or [36], wherein said (C) is at least one compound selected from the group consisting of furfural, 2-acetylfuran, 2-acetyl-5-methylfuran, 3-acetyl-2,5-dimethylfuran, furfuryl alcohol, 1-furfurylpyrrole, furfuryl propionate, 5-methylfurfural, and 5-(hydroxymethyl)furfural.
[38] The food of any one of [35] to [37], comprising any of the following (i) to (xviii) as (A), (B), and (C):
   (i) at least two compounds selected from the group consisting of (A) cyclotene, (B) β-caryophyllene oxide, and (C) furfural
   (ii) at least two compounds selected from the group consisting of (A) γ-butyrolactone, (B) β-caryophyllene oxide, and (C) furfural
   (iii) at least two compounds selected from the group consisting of (A) 2-methyltetrahydrofuran-3-one, (B) β-caryophyllene oxide, and (C) furfural
   (iv) at least two compounds selected from the group consisting of (A) α-angelicalactone, (B) β-caryophyllene oxide, and (C) furfural
   (v) at least two compounds selected from the group consisting of (A) maltol, (B) β-caryophyllene oxide, and (C) furfural
   (vi) at least two compounds selected from the group consisting of (A) 3-methyl-1,2-cyclohexanedione, (B) β-caryophyllene oxide, and (C) furfural
   (vii) at least two compounds selected from the group consisting of (A) γ-dodecanolactone, (B) β-caryophyllene oxide, and (C) furfural
   (viii) at least two compounds selected from the group consisting of (A) 5-dodecanolide, (B) β-caryophyllene oxide, and (C) furfural
   (ix) at least two compounds selected from the group consisting of (A) 4,5-dimethyl-3-hydroxy-2,5-dihydrofuran-2-one, (B) β-caryophyllene oxide, and (C) furfural
   (x) at least two compounds selected from the group consisting of (A) D-camphor, (B) β-caryophyllene oxide, and (C) furfural
   (xi) at least two compounds selected from the group consisting of (A) cyclotene, (B) β-caryophyllene oxide, and (C) 2-acetylfuran
   (xii) at least two compounds selected from the group consisting of (A) cyclotene, (B) β-caryophyllene oxide, and (C) 2-acetyl-5-methylfuran
   (xiii) at least two compounds selected from the group consisting of (A) cyclotene, (B) β-caryophyllene oxide, and (C) 3-acetyl-2,5-dimethylfuran
   (xiv) at least two compounds selected from the group consisting of (A) cyclotene, (B) β-caryophyllene oxide, and (C) furfuryl alcohol
   (xv) at least two compounds selected from the group consisting of (A) cyclotene, (B) β-caryophyllene oxide, and (C) 1-furfurylpyrrole
   (xvi) at least two compounds selected from the group consisting of (A) cyclotene, (B) β-caryophyllene oxide, and (C) furfuryl propionate
   (xvii) at least two compounds selected from the group consisting of (A) cyclotene, (B) β-caryophyllene oxide, and (C) 5-methylfurfural
   (xviii) at least two compounds selected from the group consisting of (A) cyclotene, (B) β-caryophyllene oxide, and (C) 5-(hydroxymethyl)furfural.
[39] The food of any one of [35] to [38], comprising at least two compounds selected from the group consisting of (A) cyclotene, (B) β-caryophyllene oxide, and (C) furfural.
[40] The food of any one of [35] to [39], wherein the food has an enhanced mouth-coating feel.
[41] The food of any one of [35] to [40], comprising (A), (B), and (C).
[42] The food of any one of [35] to [41], wherein
   when the food comprises at least (A), the concentration a of (A) in the food is 0.05 - 5000 weight ppb with respect to the total weight of the food to be eaten;
   when the food comprises at least (B), the concentration b of (B) in the food is 0.1 - 50000 weight ppb with respect to the total weight of the food to be eaten; and
   when the food comprises at least (C), the concentration c of (C) in the food is 0.1 - 50000 weight ppb with respect to the total weight of the food to be eaten.
[43] The food of any one of [35] to [42], wherein the food comprises at least (A) and the concentration a of (A) in the food is 0.05 - 5000 weight ppb with respect to the total weight of the food to be eaten.
[44] The food of any one of [35] to [43], wherein the food comprises at least (B) and the concentration b of (B) in the food is 0.1 - 50000 weight ppb with respect to the total weight of the food to be eaten.
[45] The food of any one of [35] to [44], wherein the food comprises at least (C) and the concentration c of (C) in the food is 0.1 - 50000 weight ppb with respect to the total weight of the food to be eaten.
[46] The food of any one of [35] to [45], wherein
   when the food comprises at least (A) and (B), the weight ratio of the concentration a of (A) and the concentration b of (B) (a:b) is a:b=0.001 to 1000;
   when the food comprises at least (A) and (C), the weight ratio of the concentration a of (A) and the concentration c of (C) (a:c) is a:c=1:0.001 to 1000; and
   when the food comprises at least (B) and (C), the weight ratio of the concentration b of (B) and the concentration c of (C) (b:c) is b:c=1:0.001 to 1000.
[47] The food of any one of [35] to [46], wherein the food comprises at least (A) and (B), and the weight ratio of the concentration a of (A) and the concentration b of (B) in the food (a:b) is a:b=1:0.001 to 1000.
[48] The food of any one of [35] to [47], wherein the food comprises at least (A) and (C), and the weight ratio of the concentration a of (A) and the concentration c of (C) in the food (a:c) is a:c=1:0.001 to 1000.
[49] The food of any one of [35] to [48], wherein the food comprises at least (B) and (C), and the weight ratio of the concentration b of (B) and the concentration c of (C) in the food (b:c) is b:c=1:0.001 to 1000.
[50] A method for enhancing a mouth-coating feel, comprising adding to a food at least two compounds selected from the group consisting of
   (A) a compound represented by the formula (I):

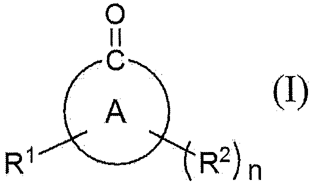

      wherein
      ring A is a 5-membered or 6-membered, saturated or unsaturated, carbocycle or oxygen-containing or nitrogen-containing heterocycle;
      R¹ is an oxo group, a hydroxy group, an alkoxy group having 1 - 4 carbon atoms, an acyloxy group having 1 - 4 carbon atoms, a hydrocarbon group having 1 - 8 carbon atoms and optionally having substituent(s), or a hydrogen atom, and when R¹ is a hydrocarbon group having 1 - 8 carbon atoms and optionally having substituent(s), a carbon atom in the hydrocarbon group may be bonded to a carbon atom of ring A to form a crosslinked structure or a saturated or unsaturated ring structure;
      R² is a hydrocarbon group having 1 - 8 carbon atoms, a hydroxy group, or a hydrogen atom; and
      n is an integer of 1 to 3,
   (B) β-caryophyllene oxide, and
   (C) a compound represented by the formula (II):

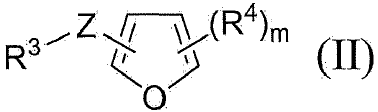

      wherein
      R³ is an acyl group having 1 - 6 carbon atoms, a hydroxy group, a pyrrole group, or an acyloxy group having 1 - 6 carbon atoms;
      Z is a single bond or an alkylene group having 1 - 6 carbon atoms;
      R⁴ is a substituent; and
      m is an integer of 0 to 3.
[51] The enhancing method of [50], wherein the aforementioned (A) is at least one compound selected from the group consisting of cyclotene, γ-butyrolactone, 2-methyltetrahydrofuran-3-one, α-angelicalactone, maltol, 3-methyl-1,2-cyclohexanedione, γ-dodecanolactone, 5-dodecanolide, 4,5-dimethyl-3-hydroxy-2,5-dihydrofuran-2-one, and D-camphor.
[52] The enhancing method of [50] or [51], wherein the aforementioned (C) is at least one compound selected from the group consisting of furfural, 2-acetylfuran, 2-acetyl-5-methylfuran, 3-acetyl-2,5-dimethylfuran, furfuryl alcohol, 1-furfurylpyrrole, furfuryl propionate, 5-methylfurfural, and 5-(hydroxymethyl)furfural.
[53] The enhancing method of any one of [50] to [52], wherein the aforementioned at least two compounds selected from the group consisting of (A), (B), and (C) are any of the following (i) to (xviii):
   (i) at least two compounds selected from the group consisting of (A) cyclotene, (B) β-caryophyllene oxide, and (C) furfural
   (ii) at least two compounds selected from the group consisting of (A) γ-butyrolactone, (B) β-caryophyllene oxide, and (C) furfural
   (iii) at least two compounds selected from the group consisting of (A) 2-methyltetrahydrofuran-3-one, (B) β-caryophyllene oxide, and (C) furfural
   (iv) at least two compounds selected from the group consisting of (A) α-angelicalactone, (B) β-caryophyllene oxide, and (C) furfural
   (v) at least two compounds selected from the group consisting of (A) maltol, (B) β-caryophyllene oxide, and (C) furfural
   (vi) at least two compounds selected from the group consisting of (A) 3-methyl-1,2-cyclohexanedione, (B) β-caryophyllene oxide, and (C) furfural
   (vii) at least two compounds selected from the group consisting of (A) γ-dodecanolactone, (B) β-caryophyllene oxide, and (C) furfural
   (viii) at least two compounds selected from the group consisting of (A) 5-dodecanolide, (B) β-caryophyllene oxide, and (C) furfural
   (ix) at least two compounds selected from the group consisting of (A) 4,5-dimethyl-3-hydroxy-2,5-dihydrofuran-2-one, (B) β-caryophyllene oxide, and (C) furfural
   (x) at least two compounds selected from the group consisting of (A) D-camphor, (B) β-caryophyllene oxide, and (C) furfural
   (xi) at least two compounds selected from the group consisting of (A) cyclotene, (B) β-caryophyllene oxide, and (C) 2-acetylfuran
   (xii) at least two compounds selected from the group consisting of (A) cyclotene, (B) β-caryophyllene oxide, and (C) 2-acetyl-5-methylfuran
   (xiii) at least two compounds selected from the group consisting of (A) cyclotene, (B) β-caryophyllene oxide, and (C) 3-acetyl-2,5-dimethylfuran
   (xiv) at least two compounds selected from the group consisting of (A) cyclotene, (B) β-caryophyllene oxide, and (C) furfuryl alcohol
   (xv) at least two compounds selected from the group consisting of (A) cyclotene, (B) β-caryophyllene oxide, and (C) 1-furfurylpyrrole
   (xvi) at least two compounds selected from the group consisting of (A) cyclotene, (B) β-caryophyllene oxide, and (C) furfuryl propionate
   (xvii) at least two compounds selected from the group consisting of (A) cyclotene, (B) β-caryophyllene oxide, and (C) 5-methylfurfural
   (xviii) at least two compounds selected from the group consisting of (A) cyclotene, (B) β-caryophyllene oxide, and (C) 5-(hydroxymethyl)furfural.
[54] The enhancing method of any one of [50] to [53], wherein the aforementioned at least two compounds selected from the group consisting of (A), (B), and (C) are at least two compounds selected from the group consisting of (A) cyclotene, (B) β-caryophyllene oxide, and (C) furfural.
[55] The enhancing method of any one of [50] to [54], wherein the method comprises adding (A), (B), and (C).
[56] The enhancing method of any one of [50] to [55], wherein
   when the method comprises adding at least (A), said (A) is added such that a concentration a of (A) in the food is 0.05 - 5000 weight ppb with respect to the total weight of the food to be eaten;
   when the method comprises adding at least (B), said (B) is added such that a concentration b of (B) in the food is 0.1 - 50000 weight ppb with respect to the total weight of the food to be eaten; and
   when the method comprises adding at least (C), said (C) is added such that a concentration c of (C) in the food is 0.1 - 50000 weight ppb with respect to the total weight of the food to be eaten.
[57] The enhancing method of any one of [50] to [56], wherein the method comprises adding at least (A), and said (A) is added such that the concentration a of (A) in the food is 0.05 - 5000 weight ppb with respect to the total weight of the food to be eaten.
[58] The enhancing method of any one of [50] to [57], wherein the method comprises adding at least (B), and said (B) is added such that the concentration b of (B) in the food is 0.1 - 50000 weight ppb with respect to the total weight of the food to be eaten.
[59] The enhancing method of any one of [50] to [58], wherein the method comprises adding at least (C), and said (C) is added such that the concentration c of (C) in the food is 0.1 - 50000 weight ppb with respect to the total weight of the food to be eaten.
[60] The enhancing method of any one of [50] to [59], wherein
   when the method comprises adding at least (A) and (B), said (A) and (B) are added such that the weight ratio of the concentration a of (A) and the concentration b of (B) (a:b) is a:b=1:0.001 to 1000;
   when the method comprises adding at least (A) and (C), said (A) and (C) are added such that the weight ratio of the concentration a of (A) and the concentration c of (C) (a:c) is a:c=1:0.001 to 1000; and
   when the method comprises adding at least (B) and (C), said (B) and (C) are added such that the weight ratio of the concentration b of (B) and the concentration c of (C) (b:c) is b:c=1:0.001 to 1000.
[61] The enhancing method of any one of [50] to [60], wherein the method comprises adding at least (A) and (B), and said (A) and (B) are added such that the weight ratio of the concentration a of (A) and the concentration b of (B) in the food (a:b) is a:b=1:0.001 to 1000.
[62] The enhancing method of any one of [50] to [61], wherein the method comprises adding at least (A) and (C), and said (A) and (C) are added such that the weight ratio of the concentration a of (A) and the concentration c of (C) in the food (a:c) is a:c=1:0.001 to 1000.
[63] The enhancing method of any one of [50] to [62], wherein the method comprises adding at least (B) and (C), and said (B) and (C) are added such that the weight ratio of the concentration b of (B) and the concentration c of (C) in the food (b:c) is b:c=1:0.001 to 1000.

### [Advantageous Effects of Invention]

According to the present invention, a flavoring composition capable of effectively enhancing a mouth-coating feel can be provided. According to the present invention, moreover, a flavoring composition capable of effectively enhancing a mouth-coating feel without imparting an off-flavor to a food can be provided.

According to the present invention, a food with an effectively enhanced mouth-coating feel and a production method thereof can be provided. According to the present invention, moreover, a food with an effectively enhanced mouth-coating feel and without an off-flavor, and a production method thereof can be provided.

According to the present invention, a method capable of effectively enhancing a mouth-coating feel can be provided. According to the present invention, moreover, a method capable of effectively enhancing a mouth-coating feel without imparting an off-flavor to a food can be provided.

### [Description of Embodiments]

The flavoring composition of the present invention (hereinafter at times simply referred to as "the composition of the present invention") is mainly characterized in that it contains, as active ingredients, at least two compounds selected from the group consisting of (A) a compound represented by the formula (I):

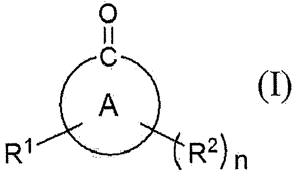

wherein
ring A is a 5-membered or 6-membered, saturated or unsaturated, carbocycle or oxygen-containing or nitrogen-containing heterocycle;
R¹ is an oxo group, a hydroxy group, an alkoxy group having 1 - 4 carbon atoms, an acyloxy group having 1 - 4 carbon atoms, a hydrocarbon group having 1 - 8 carbon atoms and optionally having substituent(s), or a hydrogen atom, and when R¹ is a hydrocarbon group having 1 - 8 carbon atoms and optionally having substituent(s), a carbon atom in the hydrocarbon group may be bonded to a carbon atom of ring A to form a crosslinked structure or a saturated or unsaturated ring structure;
R² is a hydrocarbon group having 1 - 8 carbon atoms, a hydroxy group, or a hydrogen atom; and
n is an integer of 1 to 3,
   (in the present specification, at times simply referred to as "(A)"), (B) β-caryophyllene oxide (in the present specification, at times simply referred to as "(B)"), and (C) a compound represented by the formula (II):

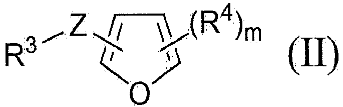

   wherein
   R³ is an acyl group having 1 - 6 carbon atoms, a hydroxy group, a pyrrole group, or an acyloxy group having 1 - 6 carbon atoms;
   Z is a single bond or an alkylene group having 1 - 6 carbon atoms;
   R⁴ is a substituent; and
   m is an integer of 0 to 3 (in the present specification, at times simply referred to as "(C)").

In the present invention, the "flavoring" refers to a food additive used to impart aroma, flavor, taste, and the like to foods.

### [Component (A)]

The compound represented by the formula (I) which is used as (A) in the present invention is sometimes to be referred to as "compound (I)" in the present specification.

Each group of the formula (I) is explained below.

In the present specification, the "hydrocarbon group" may be saturated or unsaturated and may be, for example, an alkyl group, an alkenyl group, an alkynyl group, an alkylidene group, or the like.

In the present specification, the "alkyl group having 1 - 8 carbon atoms" may be linear or optionally has a branch. Specific examples of the alkyl group having 1 - 8 carbon atoms include methyl group, ethyl group, propyl group, isopropyl group, butyl group, sec-butyl group, isobutyl group, tert-butyl group, pentyl group, neopentyl group, isopentyl group, 1-ethylpropyl group, hexyl group, isohexyl group, 1,1-dimethylbutyl group, 2,2-dimethylbutyl group, 3,3-dimethylbutyl group, 2-ethylbutyl group, heptyl group, octyl group, and the like.

In the present specification, the "alkenyl group having 2 - 8 carbon atoms" may be linear or optionally has a branch. Specific examples of the alkenyl group having 2 - 8 carbon atoms include ethenyl group, 1-propenyl group, 2-propenyl group, 1-methylethenyl group, 1-butenyl group, 2-butenyl group, 3-butenyl group, 2-methyl-1-propenyl group, 1-pentenyl group, 2-pentenyl group, 3-pentenyl group, 4-pentenyl group, 3-methyl-2-butenyl group, 1-hexenyl group, 3-hexenyl group, 5-hexenyl group, 4-methyl-3-pentenyl group, 1-heptenyl group, 1-octenyl group, and the like.

In the present specification, the "alkynyl group having 2 - 8 carbon atoms" may be linear or optionally has a branch. Specific examples of the alkynyl group having 2 - 8 carbon atoms include ethynyl group, 1-propynyl group, 2-propynyl group, 1-butynyl group, 2-butynyl group, 3-butynyl group, 1-pentynyl group, 2-pentynyl group, 3-pentynyl group, 4-pentynyl group, 1-hexynyl group, 2-hexynyl group, 3-hexynyl group, 4-hexynyl group, 5-hexynyl group, 1-heptynyl group, 1-octynyl group, and the like.

In the present specification, the "alkylidene group having 1 - 8 carbon atoms" may be linear or optionally has a branch. Specific examples of the alkylidene group having 1 - 8 carbon atoms include methylidene group, ethylidene group, propylidene group, isopropylidene group, butylidene group, pentylidene group, hexylidene group, heptylidene group, octylidene group, and the like.

In the present specification, "optionally having substituent(s)" means unsubstituted or having one or more substituents at substitutable position(s). When two or more substituents are present, the respective substituents may be the same or different.

In the present specification, examples of the "substituent" of the "optionally having substituent(s)" include halogen atom, hydroxy group, nitro group, cyano group, alkyl group, alkoxy group, alkoxycarbonyl group, acyl group, acyloxy group, amino group, oxo group, and the like. The substituent is optionally further substituted by the above-mentioned substituent(s).

In the present specification, the "alkoxy group having 1 - 4 carbon atoms" may be linear or optionally has a branch. Specific examples of the alkoxy group having 1 - 4 carbon atoms include methoxy group, ethoxy group, propoxy group, isopropoxy group, butoxy group, sec-butoxy group, tert-butoxy group, isobutoxy group, and the like.

In the present specification, specific examples of the "acyloxy group having 1 - 4 carbon atoms" include formyloxy group, acetoxy group, propionyloxy group, and the like.

The ring A in the formula (I) is a saturated or unsaturated, carbocycle or oxygen-containing or nitrogen-containing heterocycle, preferably a saturated or unsaturated, carbocycle or oxygen-containing heterocycle. The member of ring A is 5 or 6, preferably 5. When the ring A is an oxygen-containing or nitrogen-containing heterocycle, the number of hetero atoms in the heterocycle is 1 or 2, preferably 1.

One embodiment of ring A is a 5-membered, saturated or unsaturated, carbocycle, or oxygen-containing or nitrogen-containing heterocycle.

Another embodiment of ring A is a 5-membered or 6-membered, saturated or unsaturated, carbocycle, or oxygen-containing heterocycle (preferably, carbocycle or oxygen-containing heterocycle having one hetero atom).

A still another embodiment of ring A is a 5-membered, saturated or unsaturated, carbocycle, or oxygen-containing heterocycle (preferably, carbocycle or oxygen-containing heterocycle having one hetero atom).

Specific examples of ring A include carbocycles such as cyclopentane ring, cyclopentene ring, cyclopentadiene ring, cyclohexane ring, cyclohexene ring, 1,3-cyclohexadiene ring, 1,4-cyclohexadiene ring, benzene ring, or the like; oxygen-containing heterocycles such as tetrahydrofuran ring, 2,3-dihydrofuran ring, 2,5-dihydrofuran ring, furan ring, tetrahydropyran ring, 2H-pyran ring, 4H-pyran ring, or the like; nitrogen-containing heterocycles such as pyrrolidine ring, piperidine ring, or the like; and the like.

As shown in the formula (I), ring A is substituted by at least one oxo group.

R¹ and R² in the formula (I) are each a substituent bonded to a substitutable position of ring A. R¹ and R² may be each bonded to a different atom (carbon atom, hetero atom), or may be bonded to the same carbon atom if substitutable.

R¹ in the formula (I) is an oxo group, a hydroxy group, an alkoxy group having 1 - 4 carbon atoms, an acyloxy group having 1 - 4 carbon atoms, a hydrocarbon group having 1 - 8 carbon atoms and optionally having substituent(s), or a hydrogen atom.

Specific examples of the "alkoxy group having 1 - 4 carbon atoms" for R¹ include methoxy group, ethoxy group, propoxy group, isopropoxy group, butoxy group, sec-butoxy group, tert-butoxy group, isobutoxy group, and the like, preferably methoxy group. The number of carbon atoms in the alkoxy group is preferably 1 to 3, more preferably 1 or 2.

Specific examples of the "acyloxy group having 1 - 4 carbon atoms" for R¹ include formyloxy group, acetoxy group, propionyloxy group, and the like, preferably formyloxy group and acetoxy group. The number of carbon atoms in the acyloxy group is preferably 1 to 3, more preferably 1 or 2.

Examples of the "hydrocarbon group having 1 - 8 carbon atoms" of the "hydrocarbon group having 1 - 8 carbon atoms and optionally having substituent(s)" for R¹ include alkyl group having 1 - 8 carbon atoms, alkenyl group having 2 - 8 carbon atoms, alkynyl group having 2 - 8 carbon atoms, alkylidene group having 1 - 8 carbon atoms, and the like, preferably, alkyl group having 1 - 8 carbon atoms and alkenyl group having 2 - 8 carbon atoms.

Specific examples of the "alkyl group having 1 - 8 carbon atoms" for R¹ include methyl group, ethyl group, propyl group, isopropyl group, butyl group, sec-butyl group, isobutyl group, tert-butyl group, pentyl group, neopentyl group, isopentyl group, 1-ethylpropyl group, hexyl group, isohexyl group, 1,1-dimethylbutyl group, 2,2-dimethylbutyl group, 3,3-dimethylbutyl group, 2-ethylbutyl group, heptyl group, octyl group, and the like, preferably methyl group, ethyl group, propyl group, isopropyl group, butyl group, sec-butyl group, isobutyl group, and tert-butyl group, more preferably methyl group, ethyl group, propyl group, and isopropyl group, particularly preferably methyl group and ethyl group. The number of carbon atoms in the alkyl group is preferably 1 to 6, more preferably 1 to 5, further preferably 1 to 4, particularly preferably 1 to 3.

Specific examples of the "alkenyl group having 2 - 8 carbon atoms" for R¹ include ethenyl group, 1-propenyl group, 2-propenyl group, 1-methylethenyl group, 1-butenyl group, 2-butenyl group, 3-butenyl group, 2-methyl-1-propenyl group, 1-pentenyl group, 2-pentenyl group, 3-pentenyl group, 4-pentenyl group, 3-methyl-2-butenyl group, 1-hexenyl group, 3-hexenyl group, 5-hexenyl group, 4-methyl-3-pentenyl group, 1-heptenyl group, 1-octenyl group, and the like, preferably ethenyl group and 1-methylethenyl group. The number of carbon atoms in the alkyl group is preferably 2 to 6, more preferably 2 to 5, further preferably 2 to 4, particularly preferably 2 or 3.

Specific examples of the "alkynyl group having 2 - 8 carbon atoms" for R¹ include ethynyl group, 1-propynyl group, 2-propynyl group, 1-butynyl group, 2-butynyl group, 3-butynyl group, 1-pentynyl group, 2-pentynyl group, 3-pentynyl group, 4-pentynyl group, 1-hexynyl group, 2-hexynyl group, 3-hexynyl group, 4-hexynyl group, 5-hexynyl group, 1-heptynyl group, 1-octynyl group, and the like, preferably ethynyl group, 1-propynyl group, and 2-propynyl group. The number of carbon atoms in the alkynyl group is preferably 2 to 6, more preferably 2 to 5, further preferably 2 to 4, particularly preferably 2 or 3.

Specific examples of the "alkylidene group having 1 - 8 carbon atoms" for R¹ include methylidene group, ethylidene group, propylidene group, isopropylidene group, butylidene group, pentylidene group, hexylidene group, heptylidene group, octylidene group, and the like, preferably methylidene group, ethylidene group, propylidene group, and isopropylidene group. The number of carbon atoms in the alkylidene group is preferably 1 to 6, more preferably 1 to 5, further preferably 1 to 4, particularly preferably 1 to 3.

Examples of the "substituent" of the "hydrocarbon group having 1 - 8 carbon atoms and optionally having substituent(s)" for R¹ include halogen atom, hydroxy group, nitro group, cyano group, alkyl group, alkoxy group, alkoxycarbonyl group, acyl group, acyloxy group, amino group, oxo group, and the like. Among these, a substituent containing an oxygen atom (e.g., hydroxy group, alkoxycarbonyl group, oxo group, etc.) is preferred. When the "hydrocarbon group having 1 - 8 carbon atoms" for R¹ has a substituent, the number of substituents is not particularly limited as long as it is a substitutable number. It is preferably 1 to 3, more preferably 1 or 2. When the "hydrocarbon group having 1 - 8 carbon atoms" for R¹ has two or more substituents, the respective substituents may be the same or different.

When R¹ in the formula (I) is a hydrocarbon group having 1 - 8 carbon atoms and optionally having substituent(s), the carbon atom in the hydrocarbon group may be bonded to a carbon atom of ring A to form a crosslinked structure or a saturated or unsaturated ring structure.

R¹ is preferably an oxo group, a hydroxy group, an alkoxy group having 1 - 4 carbon atoms (e.g., methoxy group, etc.), an acyloxy group having 1 - 4 carbon atoms (e.g., acetoxy group, etc.), a hydrocarbon group having 1 - 8 carbon atoms (e.g., alkyl group, alkenyl group, etc.) and optionally having substituent(s), or a hydrogen atom, more preferably, an oxo group, a hydroxy group, a methoxy group, an acetoxy group, an alkyl group having 1 - 8 carbon atoms (e.g., methyl group, ethyl group, heptyl group, octyl group, etc.) and optionally having substituent(s), an alkenyl group having 2 - 8 carbon atoms (e.g., 1-methylethenyl group, etc.) and optionally having substituent(s), or a hydrogen atom, particularly preferably, an oxo group, a hydroxy group, a methoxy group, an acetoxy group, a methyl group optionally having substituent(s) (e.g., hydroxy group, alkoxycarbonyl group, etc.), ethyl group optionally having substituent(s) (e.g., hydroxy group, alkoxycarbonyl group, etc.), an isopropenyl group, a heptyl group, an octyl group, or a hydrogen atom.

R² in the formula (I) is a hydrocarbon group having 1 - 8 carbon atoms, a hydroxy group, or a hydrogen atom.

R² is preferably an alkyl group having 1 - 8 carbon atoms, an alkylidene group having 1 - 8 carbon atoms, a hydroxy group, or a hydrogen atom, more preferably, an alkyl group having 1 - 8 carbon atoms (e.g., methyl group, ethyl group, pentyl group, etc.), an alkylidene group having 1 - 8 carbon atoms (e.g., propylidene group, etc.), a hydroxy group, or a hydrogen atom, particularly preferably, a methyl group, a pentyl group, a propylidene group, a hydroxy group, or a hydrogen atom.

In the formula (I), n is an integer of 1 to 3. The n is preferably 1 or 2, more preferably 1.

In one embodiment, when n in the formula (I) is 2 or 3, R² in plurality may be the same or different.

Preferred compounds (I) are shown below.

### [Compound (I-A)]

Compound (I) wherein
ring A is a 5-membered or 6-membered, saturated or unsaturated carbocycle;
when R¹ is an oxo group, a hydroxy group, an alkoxy group having 1 - 4 carbon atoms, an acyloxy group having 1 - 4 carbon atoms, an alkyl group having 1 - 8 (preferably, 1 - 6) carbon atoms and optionally having substituent(s), alkenyl group having 2 - 8 (preferably, 2 - 6) carbon atoms and optionally having substituent(s), or a hydrogen atom, and when R¹ is an alkyl group having 1 - 8 (preferably, 1 - 6) carbon atoms and optionally having substituent(s), or an alkenyl group having 2 - 8 (preferably, 2 - 6) carbon atoms and optionally having substituent(s), the carbon atom in the alkyl group or alkenyl group may be bonded to a carbon atom of ring A to form a crosslinked structure or a saturated or unsaturated ring structure;
R² is an alkyl group having 1 - 8 (preferably, 1 - 6) carbon atoms, an alkylidene group having 1 - 8 (preferably, 1 - 6) carbon atoms, a hydroxy group, or a hydrogen atom; and
n is an integer of 1 to 3 (preferably, 1, 2).

### [Compound (I-B)]

Compound (I) wherein
ring A is a 5-membered or 6-membered, saturated or unsaturated oxygen-containing heterocycle;
when R¹ is an oxo group, a hydroxy group, an alkoxy group having 1 - 4 carbon atoms, an acyloxy group having 1 - 4 carbon atoms, an alkyl group having 1 - 8 (preferably, 1 - 6) carbon atoms and optionally having substituent(s), alkenyl group having 2 - 8 (preferably, 2 - 6) carbon atoms and optionally having substituent(s), or a hydrogen atom, and when R¹ is an alkyl group having 1 - 8 (preferably, 1 - 6) carbon atoms and optionally having substituent(s), or an alkenyl group having 2 - 8 (preferably, 2 - 6) carbon atoms and optionally having substituent(s), the carbon atom in the alkyl group or alkenyl group may be bonded to a carbon atom of ring A to form a crosslinked structure or a saturated or unsaturated ring structure;
R² is an alkyl group having 1 - 8 (preferably, 1 - 6) carbon atoms, an alkylidene group having 1 - 8 (preferably, 1 - 6) carbon atoms, a hydroxy group, or a hydrogen atom; and
n is an integer of 1 to 3 (preferably, 1, 2).

### [Compound (I-C)]

Compound (I) wherein
ring A is a 5-membered or 6-membered, saturated or unsaturated nitrogen-containing heterocycle;
when R¹ is an oxo group, a hydroxy group, an alkoxy group having 1 - 4 carbon atoms, an acyloxy group having 1 - 4 carbon atoms, an alkyl group having 1 - 8 (preferably, 1 - 6) carbon atoms and optionally having substituent(s), alkenyl group having 2 - 8 (preferably, 2 - 6) carbon atoms and optionally having substituent(s), or a hydrogen atom, and when R¹ is an alkyl group having 1 - 8 (preferably, 1 - 6) carbon atoms and optionally having substituent(s), or an alkenyl group having 2 - 8 (preferably, 2 - 6) carbon atoms and optionally having substituent(s), the carbon atom in the alkyl group or alkenyl group may be bonded to a carbon atom of ring A to form a crosslinked structure or a saturated or unsaturated ring structure;
R² is an alkyl group having 1 - 8 (preferably, 1 - 6) carbon atoms, an alkylidene group having 1 - 8 (preferably, 1 - 6) carbon atoms, a hydroxy group, or a hydrogen atom; and
n is an integer of 1 to 3 (preferably, 1, 2).

In one embodiment, compound (I) may be a compound represented by the following formula (Ia):

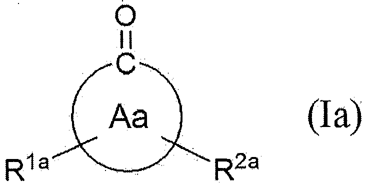

wherein
ring Aa is a 5-membered or 6-membered, saturated or unsaturated, carbocycle or oxygen-containing or nitrogen-containing heterocycle;
R^{1a} is an oxo group, a hydroxy group, or a hydrogen atom; and
R^{2a} is an.alkyl group having 1 - 8 carbon atoms, or a hydrogen atom.

In the present specification, the compound represented by the formula (Ia) is sometimes to be referred to as "compound (Ia)".

Each group of the formula (Ia) is explained below.

The ring Aa in the formula (Ia) is similar to ring A in the formula (I), and preferred embodiments and specific examples are also the same.

As shown in the formula (Ia), ring Aa is substituted by at least one oxo group.

In the formula (Ia), the moiety represented by 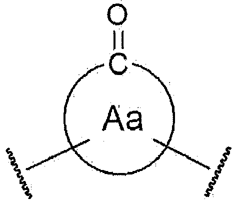 is preferably selected from the following:

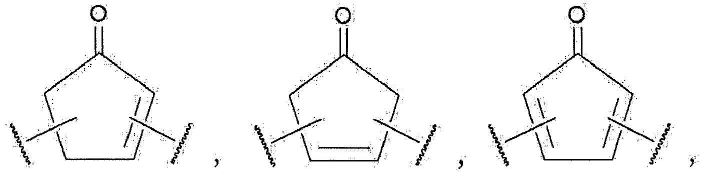

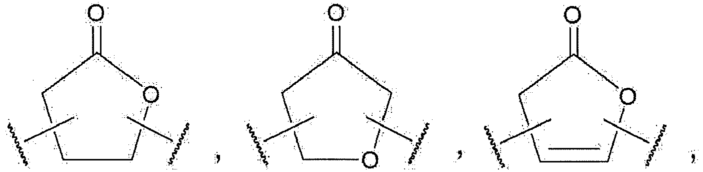

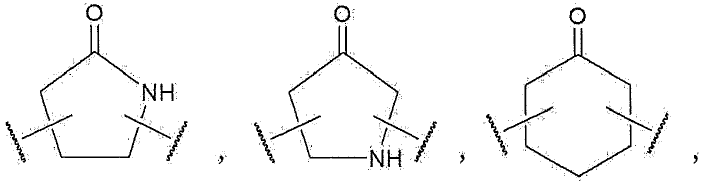

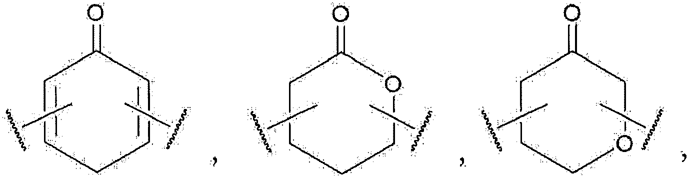

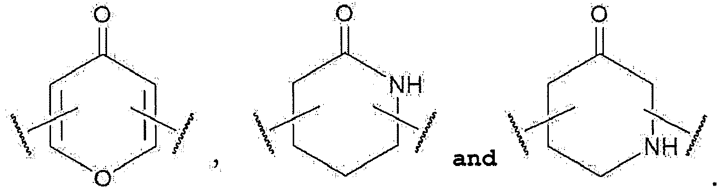

Particularly, the aforementioned moiety in the formula (Ia) is more preferably selected from: 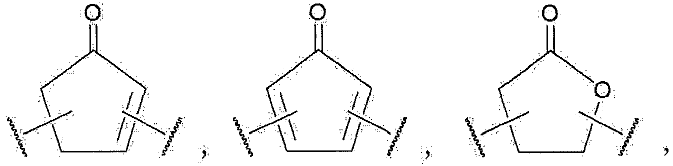 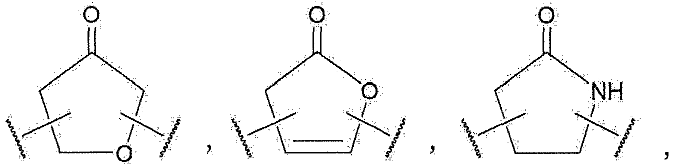 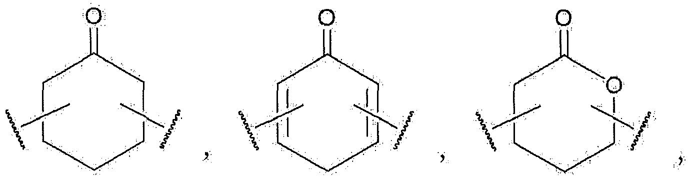 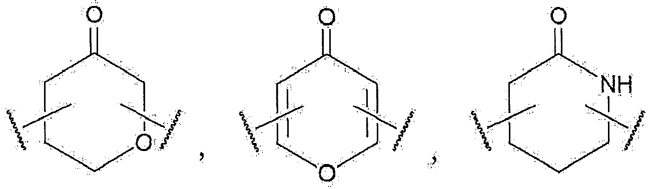 and

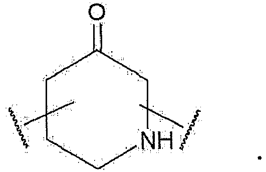

The aforementioned moiety in the formula (Ia) is particularly preferably selected from the following:

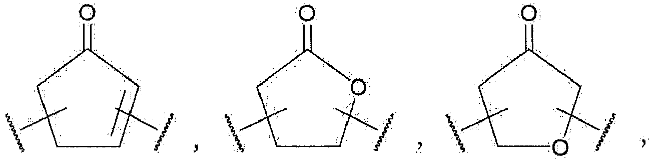

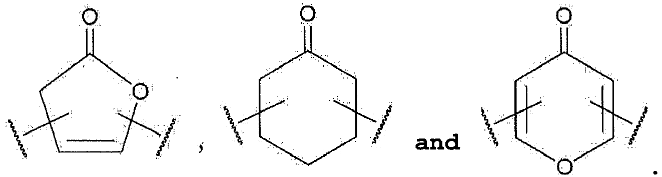

R^{1a} and R^{2a} in the formula (Ia) are each a substituent bonded to a substitutable position of ring Aa. R^{1a} and R^{2a} may be each bonded to a different atom (carbon atom, hetero atom), or bonded to the same carbon atom if substitutable.

R^{1a} in the formula (Ia) is an oxo group, a hydroxy group, or a hydrogen atom. R^{1a} is preferably a hydroxy group or a hydrogen atom.

R^{2a} in the formula (Ia) is an alkyl group having 1 - 8 carbon atoms, or a hydrogen atom.

Specific examples of the "alkyl group having 1 - 8 carbon atoms" for R^{2a} include methyl group, ethyl group, propyl group, isopropyl group, butyl group, sec-butyl group, isobutyl group, tert-butyl group, pentyl group, neopentyl group, isopentyl group, 1-ethylpropyl group, hexyl group, isohexyl group, 1,1-dimethylbutyl group, 2,2-dimethylbutyl group, 3,3-dimethylbutyl group, 2-ethylbutyl group, heptyl group, octyl group, and the like, preferably, methyl group, ethyl group, propyl group, isopropyl group, butyl group, sec-butyl group, isobutyl group, and tert-butyl group, more preferably, methyl group, ethyl group, propyl group, and isopropyl group, particularly preferably, methyl group and ethyl group. The number of carbon atoms in the alkyl group is preferably 1 to 6, more preferably 1 to 5, further preferably 1 to 4, particularly preferably 1 to 3.

R^{2a} is preferably an alkyl group having 1 - 6 carbon atoms or a hydrogen atom, more preferably, an alkyl group having 1 - 4 carbon atoms, or a hydrogen atom, further preferably, a methyl group, an ethyl group, a propyl group, an isopropyl group, or a hydrogen atom, particularly preferably, a methyl group, an ethyl group, or a hydrogen atom.

Preferred compounds (Ia) are shown below.

### [Compound (Ia-A)]

Compound (Ia) wherein
ring A is a 5-membered or 6-membered, saturated or unsaturated carbocycle;
R^{1a} is an oxo group, a hydroxy group, or a hydrogen atom; and
R^{2a} is an alkyl group having 1 - 6 (preferably, 1 - 4) carbon atoms, or a hydrogen atom.

### [Compound (Ia-B)]

Compound (Ia) wherein
ring A is a 5-membered or 6-membered, saturated or unsaturated oxygen-containing heterocycle;
R^{1a} is an oxo group, a hydroxy group, or a hydrogen atom; and
R^{2a} is an alkyl group having 1 - 6 (preferably, 1 - 4) carbon atoms, or a hydrogen atom.

### [Compound (Ia-C)]

Compound (Ia) wherein
ring A is a 5-membered or 6-membered, saturated or unsaturated nitrogen-containing heterocycle;
R^{1a} is a hydrogen atom; and
R^{2a} is an alkyl group having 1 - 6 (preferably, 1 - 4) carbon atoms, or a hydrogen atom.

### [Compound (Ia-D)]

Compound (Ia) wherein, in the formula (Ia),
a moiety represented by

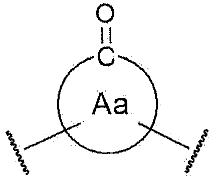

is selected from the following; 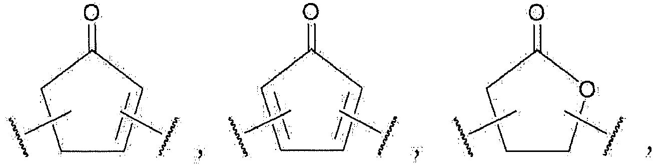 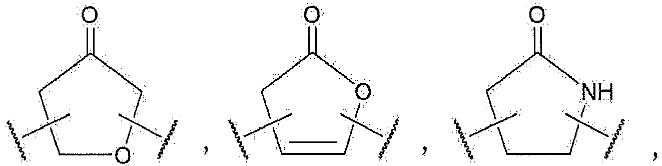 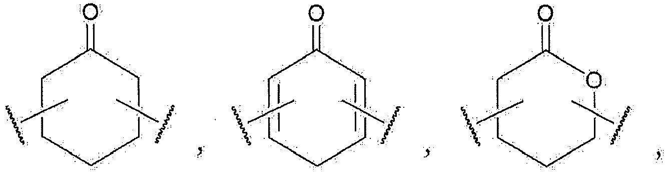 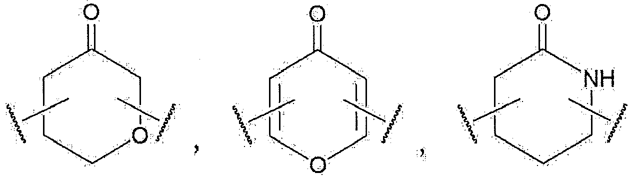 and

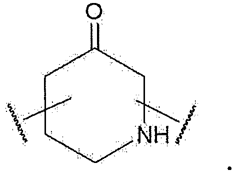

R^{1a} is an oxo group, a hydroxy group, or a hydrogen atom; and
R^{2a} is an alkyl group having 1 - 6 (preferably, 1 - 4) carbon atoms, or a hydrogen atom.

### [Compound (Ia-E)]

Compound (Ia) wherein, in the formula (Ia),
a moiety represented by

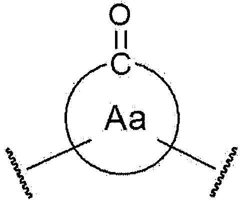

is selected from the following; 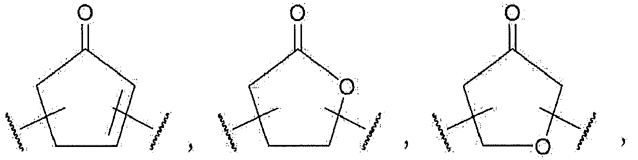 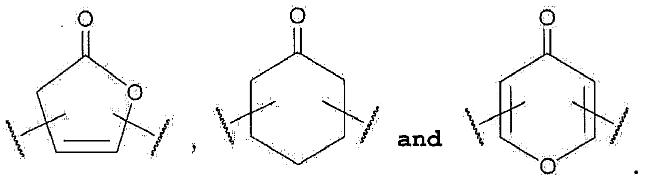
R^{1a} is an oxo group, a hydroxy group, or a hydrogen atom; and
R^{2a} is an alkyl group having 1 - 6 (preferably, 1 - 4) carbon atoms, or a hydrogen atom.

### [Compound (Ia-F)]

Compound (Ia) represented by a formula selected from the following; 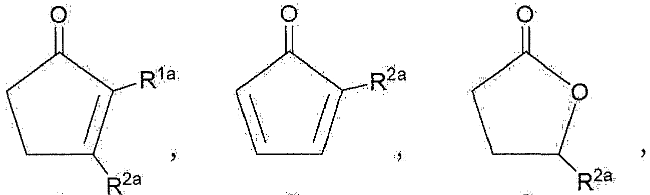 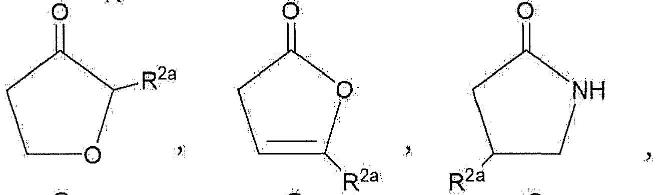 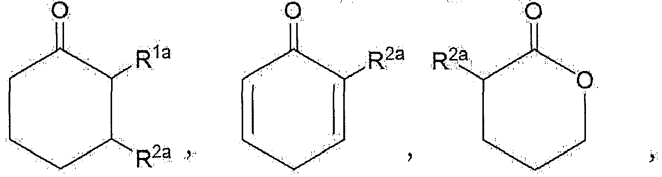 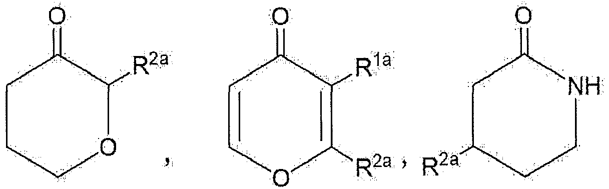 and

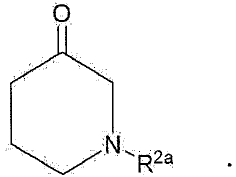

In each formula,
R^{1a} is an oxo group, a hydroxy group, or a hydrogen atom (preferably, a hydroxy group or a hydrogen atom); and
R^{2a} is an alkyl group having 1 - 6 (preferably, 1 - 4) carbon atoms, or a hydrogen atom.

### [Compound (Ia-G)]

Compound (Ia) represented by a formula selected from the following;

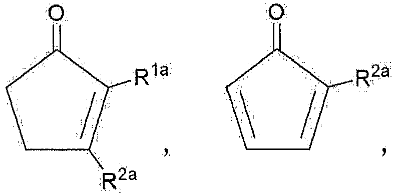

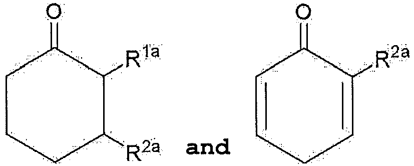

in each formula,
R^{1a} is an oxo group, a hydroxy group, or a hydrogen atom; and
R^{2a} is an alkyl group having 1 - 6 (preferably, 1 - 4) carbon atoms, or a hydrogen atom.

### [Compound (Ia-H)]

Compound (Ia) represented by a formula selected from the following;

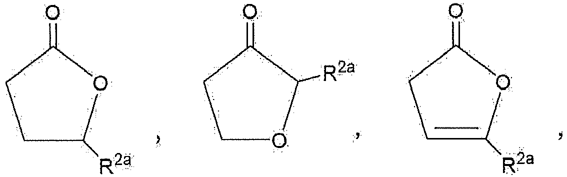

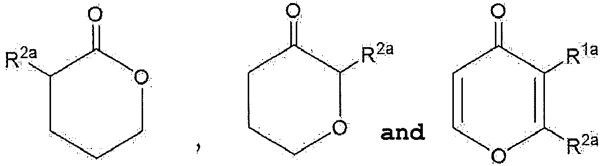

in each formula,
R^{1a} is an oxo group, a hydroxy group, or a hydrogen atom; and
R^{2a} is an alkyl group having 1 - 6 (preferably, 1 - 4) carbon atoms, or a hydrogen atom.

### [Compound (Ia-I)]

Compound (Ia) represented by a formula selected from the following;

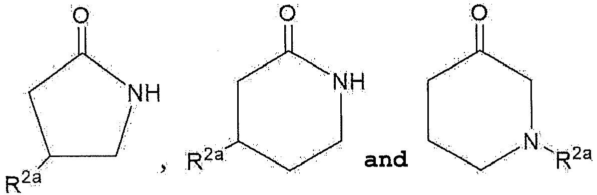

in each formula,
R^{2a} is an alkyl group having 1 - 6 (preferably, 1 - 4) carbon atoms, or a hydrogen atom.

### [Compound (Ia-J)]

Compound (Ia) represented by a formula selected from the following;

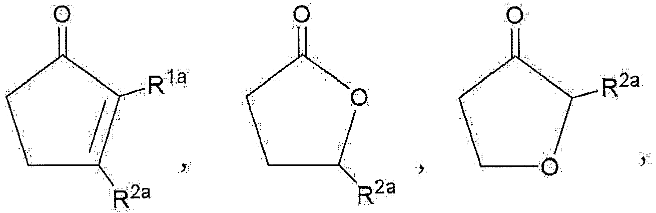

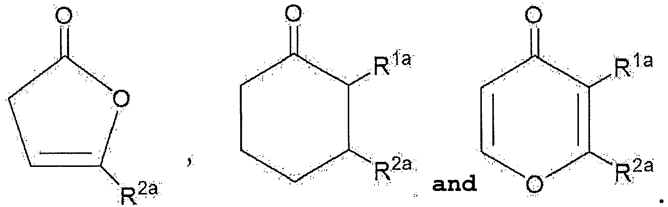

in each formula,
R^{1a} is an oxo group, a hydroxy group, or a hydrogen atom (preferably, a hydroxy group or hydrogen atom); and
R^{2a} is an alkyl group having 1 - 6 (preferably, 1 - 4) carbon atoms, or a hydrogen atom.

Specific examples of preferred compound (I) include
·cyclotene (CAS Registry Number: 80-71-7): 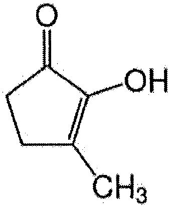
·3-methyl-2-cyclopentenone (CAS Registry Number: 2758-18-1): 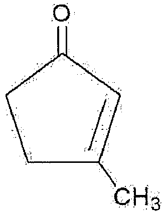
·γ-butyrolactone (CAS Registry Number: 96-48-0): 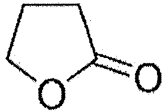
·2-methyltetrahydrofuran-3-one (CAS Registry Number: 3188-00-9) : 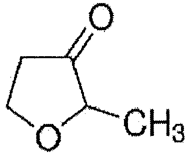
·α-angelicalactone (CAS Registry Number: 591-12-8): 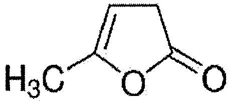
·ethylcyclopentenolone (CAS Registry Number: 21835-01-8): 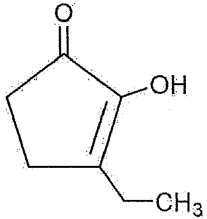
·3-methyl-1,2-cyclohexanedione (CAS Registry Number: 3008-43-3) : 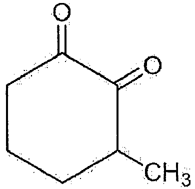
·maltol (CAS Registry Number: 118-71-8): 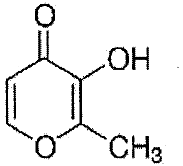
·tetrahydropyran-3-one (CAS Registry Number: 23462-75-1): 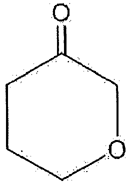
·2,5-cyclohexadien-1-one (CAS Registry Number: 5664-33-5): 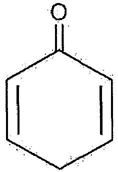
·4-methylpyrrolidin-2-one (CAS Registry Number: 2996-58-9, when tertiary carbon is S form; 31551-66-3, when tertiary carbon is R form; 260061-31-2): 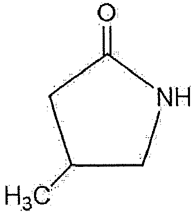
·2-methyl-2,4-cyclopentadien-1-one (CAS Registry Number: 94618-71-0) : 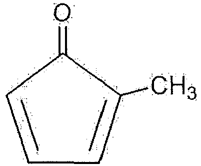
·4-ethylpiperidin-2-one (CAS Registry Number: 50549-26-3): 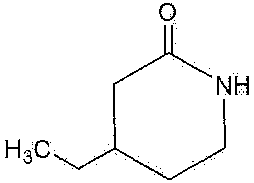
·1-methylpiperidin-3-one (CAS Registry Number: 5519-50-6): 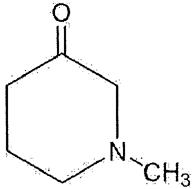
·tetrahydro-3-methylpyran-2-one (CAS Registry Number: 10603-03-9) : 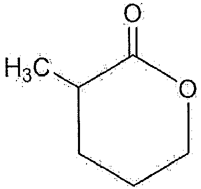
·γ-dodecanolactone (CAS Registry Number: 2305-05-7): 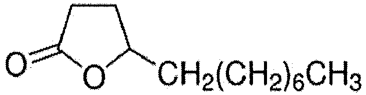
·5-dodecanolide (CAS Registry Number: 713-95-1): 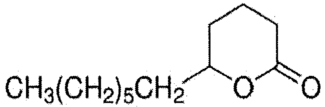
·2,5-dimethyl-4-methoxy-3(2H)-furanone (CAS Registry Number: 4077-47-8): 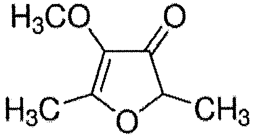
·D-erythro-hex-2-enonic acid γ-lactone (CAS Registry Number: 89-65-6): 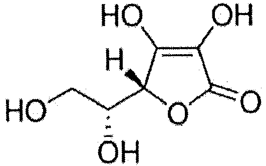
·4-(acetoxy)-2,5-dimethyl-3(2H)-furanone (CAS Registry Number: 4166-20-5): 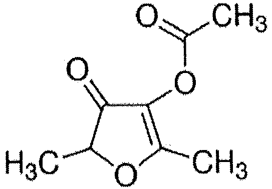
·methyl 3-oxo-2-pentylcyclopentylacetate (CAS Registry Number: 24851-98-7): 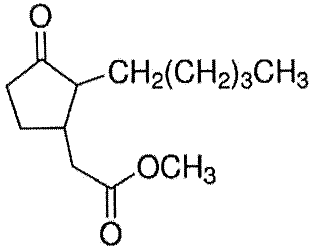
·4,5-dimethyl-3-hydroxy-2,5-dihydrofuran-2-one (CAS Registry Number: 28664-35-9): 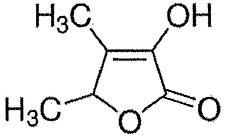
·3,4-dimethyl-1,2-cyclopentanedione (CAS Registry Number: 13494-06-9): 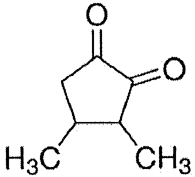
·D-camphor (CAS Registry Number: 464-49-3): 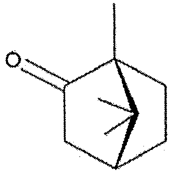
·3,4-dihydro-2H-1-benzopyran-2-one (CAS Registry Number: 119-84-6): 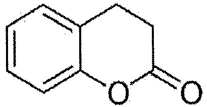
· (5R)-2-methyl-5-(1-methylethenyl)-2-cyclohexen-1-one (CAS Registry Number: 6485-40-1): 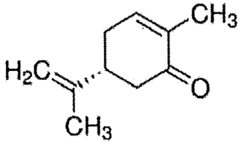
· 3-propylidene-1(3H)-isobenzofuranone (CAS Registry Number: 17369-59-4): 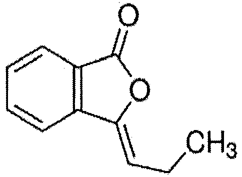
· 3,5,5-trimethyl-2-cyclohexen-1-one (CAS Registry Number: 78-59-1): 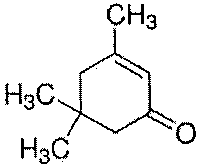
and the like. Among these, cyclotene, γ-butyrolactone, 2-methyltetrahydrofuran-3-one, α-angelicalactone, maltol, 3-methyl-1,2-cyclohexanedione, γ-dodecanolactone, 5-dodecanolide, 4,5-dimethyl-3-hydroxy-2,5-dihydrofuran-2-one, and D-camphor are preferred, and cyclotene is particularly preferred, since they can effectively enhance the mouth-coating feel.

The production method of (A) is not particularly limited, and those produced by a method known per se (e.g., chemical synthesis method, enzyme method, fermentation method, extraction method, etc.) or a method analogous thereto may be used. For example, a cyclotene analogous compound can be obtained by a method such as extraction from plants such as coffee bean or the like (MA. Gianturco, AS. Giammarino, R.G. Pitcher, Tetrahedron 19 2051 (1963)), treatment of lumber at a high temperature (J. Meyerfeld, Chem. Ztg. 36 549 (1912)) or heat-alkaline treatment (T. Enkvist, B. Alfredsson, M. Merikallio, P. Paakonen, O. Jarrela, Acta. Chem. Scand. 8 51 (1954)), heat treatment of saccharides (WO 2014/157381; K. Heyns, R. Stute & H. Paulsen, Carbohydrate Res., 2, 132 (1966); R. R. Johnson, E. D. Alford & G. W. Kinzer, J. Agr. Food Chem., 17, 22 (1969); Yasuo Shimizu, Shigeki Matsuto, Yasuyuki Mizunuma, Ikunosuke Okada, NIPPON SHOKUHIN KOGYO GAKKAISHI, 17, 385, 391, 397 (1970)), or the like, or a method analogous thereto. A commercially available product may also be used as (A).

### [Component (B)]

The β-caryophyllene oxide used as (B) in the present invention is represented by the following formula and its CAS Registry Number is 1139-30-6.

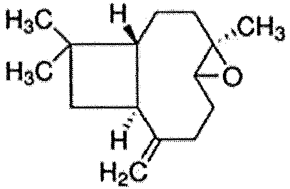

The production method of (B) is not particularly limited, and one produced by a method known per se (e.g., chemical synthesis method, enzyme method, fermentation method, extraction method, etc.) or a method analogous thereto may be used. A commercially available product may also be used as (B).

### [Component (C)]

The compound represented by the formula (II) which is used as (C) in the present invention is sometimes to be referred to as "compound (II)" in the present specification.

Each group of the formula (II) is explained below.

In the present specification, the "acyl group having 1 - 6 carbon atoms" may be linear or optionally has a branch, and is preferably linear. The acyl group may be saturated or may contain an unsaturated bond. Specific examples of the acyl group having 1 - 6 carbon atoms include formyl group, acetyl group, propionyl group, butyryl group, isobutyryl group, valeryl group, isovaleryl group, pivaloyl group, hexanoyl group, and the like.

In the present specification, the "acyloxy group having 1 - 6 carbon atoms" may be linear or optionally has a branch, and is preferably linear. The acyl group may be saturated or may contain an unsaturated bond. Specific examples of the acyl group having 1 - 6 carbon atoms include formyloxy group, acetoxy group, propionyloxy group, butyryloxy group, isobutyryloxy group, valeryloxy group, isovaleryloxy group, pivaloyloxy group, hexanoyloxy group, and the like.

In the present specification, the "alkylene group having 1 - 6 carbon atoms" may be linear or optionally has a branch, and is preferably linear. Specific examples of the alkylene group having 1 - 6 carbon atoms include methylene group, ethylene group, trimethylene group, tetramethylene group, pentamethylene group, hexamethylene group, and the like.

R³ in the formula (II) is an acyl group having 1 - 6 carbon atoms, a hydroxy group, a pyrrole group, or an acyloxy group having 1 - 6 carbon atoms.

Specific examples of the "acyl group having 1 - 6 carbon atoms" for R³ include formyl group, acetyl group, propionyl group, butyryl group, isobutyryl group, valeryl group, isovaleryl group, pivaloyl group, hexanoyl group, and the like, preferably formyl group, acetyl group, propionyl group, butyryl group, and isobutyryl group, more preferably formyl group, acetyl group, and propionyl group, particularly preferably formyl group and acetyl group. The number of carbon atoms in the acyl group is preferably 1 to 4.

Specific examples of the "acyloxy group having 1 - 6 carbon atoms" for R³ include formyloxy group, acetoxy group, propionyloxy group, butyryloxy group, isobutyryloxy group, valeryloxy group, isovaleryl oxy group, pivaloyl oxy group, hexanoyloxy group, and the like, preferably formyloxy group, acetoxy group, propionyloxy group, butyryloxy group, isobutyryloxy group, more preferably formyloxy group, acetoxy group, and propionyloxy group, particularly preferably propionyloxy group. The number of carbon atoms in the acyloxy group is preferably 1 to 4.

R³ in the formula (II) is preferably an acyl group having 1 - 4 carbon atoms, a hydroxy group, a pyrrole group or an acyloxy group having 1 - 4 carbon atoms, more preferably, a formyl group, an acetyl group, a hydroxy group, a pyrrole group, or a propionyloxy group, particularly preferably, a formyl group or an acetyl group.

Z in the formula (II) is a single bond or an alkylene group having 1 - 6 carbon atoms.

Specific examples of the "alkylene group having 1 - 6 carbon atoms" for Z include methylene group, ethylene group, trimethylene group, tetramethylene group, pentamethylene group, hexamethylene group, and the like, preferably methylene group, ethylene group, trimethylene group, and tetramethylene group, more preferably methylene group and ethylene group, particularly preferably methylene group. The number of carbon atoms in the alkylene group is preferably 1 to 4.

Z in the formula (II) is preferably a single bond or an alkylene group having 1 - 4 carbon atoms, more preferably a single bond or a methylene group.

In one embodiment of compound (II), preferably, R³ is an acyl group having 1 - 6 carbon atoms, and Z is a single bond; more preferably, R³ is an acyl group having 1 - 4 carbon atoms, and Z is a single bond; particularly preferably, R³ is a formyl group or an acetyl group, and Z is a single bond.

In one embodiment of compound (II), preferably, R³ is a hydroxy group, a pyrrole group, or an acyloxy group having 1 - 6 carbon atoms, and Z is an alkylene group having 1 - 6 carbon atoms; more preferably, R³ is a hydroxy group, a pyrrole group, or an acyloxy group having 1 - 4 carbon atoms, and Z is an alkylene group having 1 - 4 carbon atoms; particularly preferably, R³ is a hydroxy group, a pyrrole group, or a propionyloxy group, and Z is a methylene group.

R⁴ in the formula (II) shows a substituent. The substituent for R⁴ is not particularly limited. Examples thereof include alkyl group having 1 - 6 carbon atoms (e.g., methyl group, ethyl group, propyl group, isopropyl group, butyl group, isobutyl group, etc.), cycloalkyl group having 3 - 8 carbon atoms (e.g., cyclopropyl group, cyclobutyl group, cyclopentyl group, cyclohexyl group, cycloheptyl group etc.), alkenyl group having 2 - 6 carbon atoms (e.g., ethenyl group, 1-propenyl group, 2-propenyl group, 1-butenyl group, 2-butenyl group, 3-butenyl group etc.), alkynyl group having 2 - 6 carbon atoms (e.g., ethynyl group, 1-propynyl group, 2-propynyl group, 1-butynyl group, 2-butynyl group, 3-butynyl group etc.), acyl group having 1 - 6 carbon atoms (e.g., formyl group, acetyl group, propionyl group, butyryl group, isobutyryl group etc.), alkoxy group having 1 - 6 carbon atoms (e.g., methoxy group, ethoxy group, propoxy group, isopropoxy group, butoxy group, isobutoxy group etc.), hydroxyalkyl group having 1 - 6 carbon atoms (e.g., hydroxymethyl group, 1-hydroxyethyl group, 2-hydroxyethyl group, 1-hydroxypropyl group, 2-hydroxypropyl group, 3-hydroxypropyl group etc.) and the like. It is preferably an alkyl group having 1 - 6 carbon atoms or a hydroxyalkyl group having 1 - 6 carbon atoms, more preferably an alkyl group having 1 - 4 carbon atoms or a hydroxyalkyl group having 1 - 4 carbon atoms, particularly preferably a methyl group or a hydroxymethyl group.

In the formula (II), m is an integer of 0 to 3. m is preferably an integer of 0 to 2, more preferably 0 or 1.

In one embodiment, when m in the formula (II) is 2 or 3, R⁴ in plurality may be the same or different.

In the formula (II), a group represented by "R³-Z-" and a group represented by "R⁴-" are preferably not the same.

Preferred compounds (II) are shown below.

### [Compound (II-A)]

Compound (II) wherein
R³ is a formyl group, an acetyl group, a hydroxy group, a pyrrole group, or a propionyloxy group;
Z is a single bond or a methylene group;
R⁴ is a substituent (preferably, an alkyl group having 1 - 6 carbon atoms or a hydroxyalkyl group having 1 - 6 carbon atoms); and
m is an integer of 0 to 3.

### [Compound (II-B)]

Compound (II) wherein
R³ is a formyl group, an acetyl group, a hydroxy group, a pyrrole group, or a propionyloxy group;
Z is a single bond or a methylene group;
R⁴ is a substituent (preferably, an alkyl group having 1 - 6 carbon atoms or a hydroxyalkyl group having 1 - 6 carbon atoms); and
m is 0 or 1.

### [Compound (II-C)]

Compound (II) wherein
R³ is an acyl group having 1 - 6 carbon atoms or a hydroxy group;
Z is a single bond or an alkylene group having 1 - 6 carbon atoms;
R⁴ is a substituent (preferably, an alkyl group having 1 - 6 carbon atoms or a hydroxyalkyl group having 1 - 6 carbon atoms); and
m is an integer of 0 to 3.

### [Compound (II-D)]

Compound (II) wherein
R³ is a formyl group, an acetyl group, or a hydroxy group;
Z is a single bond or a methylene group;
R⁴ is a substituent (preferably, an alkyl group having 1 - 6 carbon atoms or a hydroxyalkyl group having 1 - 6 carbon atoms); and
m is an integer of 0 to 3.

### [Compound (II-E)]

Compound (II) wherein
R³ is a formyl group, an acetyl group, or a hydroxy group;
Z is a single bond or a methylene group;
R⁴ is a substituent (preferably, an alkyl group having 1 - 6 carbon atoms or a hydroxyalkyl group having 1 - 6 carbon atoms); and
m is 0 or 1.

### [Compound (II-F)]

Compound (II) wherein
R³ is an acyl group having 1 - 6 carbon atoms or a pyrrole group;
Z is a single bond or an alkylene group having 1 - 6 carbon atoms;
R⁴ is a substituent (preferably, an alkyl group having 1 - 6 carbon atoms or a hydroxyalkyl group having 1 - 6 carbon atoms); and
m is an integer of 0 to 3.

### [Compound (II-G)]

Compound (II) wherein
R³ is a formyl group, an acetyl group, or a pyrrole group;
Z is a single bond or a methylene group;
R⁴ is a substituent (preferably, an alkyl group having 1 - 6 carbon atoms or a hydroxyalkyl group having 1 - 6 carbon atoms); and
m is an integer of 0 to 3 (preferably, 0 or 1).

### [Compound (II-H)]

Compound (II) wherein
R³ is a formyl group, an acetyl group, or a pyrrole group;
Z is a single bond or a methylene group;
R⁴ is a substituent (preferably, an alkyl group having 1 - 6 carbon atoms or a hydroxyalkyl group having 1 - 6 carbon atoms); and
m is 0 or 1.

### [Compound (II-I)]

Compound (II) wherein
R³ is an acyl group having 1 - 6 carbon atoms or an acyloxy group having 1 - 6 carbon atoms;
Z is a single bond or an alkylene group having 1 - 6 carbon atoms;
R⁴ is a substituent (preferably, an alkyl group having 1 - 6 carbon atoms or a hydroxyalkyl group having 1 - 6 carbon atoms); and
m is an integer of 0 to 3.

### [Compound (II-J)]

Compound (II) wherein
R³ is a formyl group, an acetyl group, or a propionyloxy group;
Z is a single bond or a methylene group;
R⁴ is a substituent (preferably, an alkyl group having 1 - 6 carbon atoms or a hydroxyalkyl group having 1 - 6 carbon atoms); and
m is an integer of 0 to 3 (preferably, 0 or 1).

### [Compound (II-K)]

Compound (II) wherein
R³ is a formyl group, an acetyl group, or a propionyloxy group;
Z is a single bond or a methylene group;
R⁴ is a substituent (preferably, an alkyl group having 1 - 6 carbon atoms or a hydroxyalkyl group having 1 - 6 carbon atoms); and
m is 0 or 1.

Specific examples of preferred compound (II) include
·furfural (CAS Registry Number: 98-01-1): 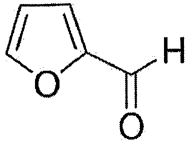
·2-acetylfuran (CAS Registry Number: 1192-62-7): 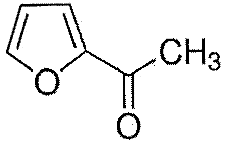
·2-acetyl-5-methylfuran (CAS Registry Number: 1193-79-9): 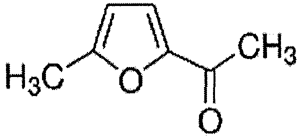
·3-acetyl-2,5-dimethylfuran (CAS Registry Number: 10599-70-9): 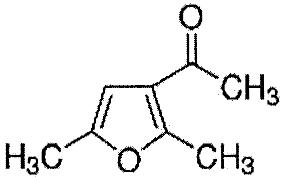
·furfuryl alcohol (CAS Registry Number: 98-00-0): 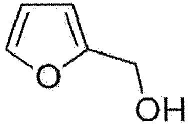
·1-furfurylpyrrole (CAS Registry Number: 1438-94-4): 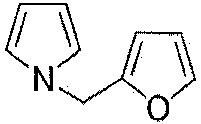
·furfuryl propionate (CAS Registry Number: 623-19-8): 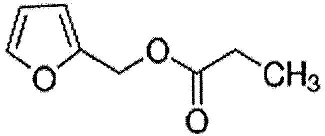
·5-methylfurfural (CAS Registry Number: 620-02-0): 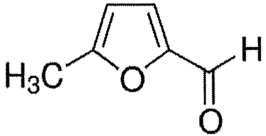
·5-(hydroxymethyl)furfural (CAS Registry Number: 67-47-0): 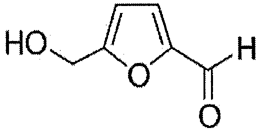
and the like. Among these, furfural is preferred since it can effectively enhance a mouth-coating feel.

The production method of (C) is not particularly limited, and those produced by a method known per se (e.g., chemical synthesis method, enzyme method, fermentation method, extraction method, etc.) or a method analogous thereto may be used. A commercially available product may also be used as (C).

In one embodiment, (A), (B), and (C) may be chemically synthesized products each produced by a chemical synthesis method, or an isolated product extracted and purified from a material containing at least one compound selected from (A), (B), and (C). Examples of the material containing at least one of (A), (B), and (C) include natural products such as agricultural, livestock and fishery products (e.g., maple, walnut, black pepper, white pepper, Chinese pepper, cumin, pine, melissa, patchouli, mugwort, citronella, clary sage, corn rachis, oats, wheat bran, etc.); fermentation products such as culture solution obtained by culturing microorganisms, bacterial cells, or the like; and processed products thereof (e.g., smoking agent, caramel sauce, wine, sugarcane processed product, raw sugar, Wasanbon sugar, brown sugar, molasses, coffee bean, coffee, spice extract, etc.); and the like.

In the present invention, a material containing at least one compound selected from (A), (B), and (C) may be used as it is or after purification to a desired degree, instead of the chemically synthesized product or isolated product of (A), (B), or (C), or in addition to the chemically synthesized product or isolated product. In the present invention, the amount of (A), (B), and (C) contained in the material containing at least one compound selected from (A), (B), and (C) is measured by gas chromatography-mass spectrometry (GC-MS) or the like.

At least two compounds selected from the group consisting of (A), (B), and (C) contained in the composition of the present invention may be any of the following (i) to (xviii).
(i) at least two compounds selected from the group consisting of (A) cyclotene, (B) β-caryophyllene oxide, and (C) furfural (preferably, all these three compounds)
(ii) at least two compounds selected from the group consisting of (A) γ-butyrolactone, (B) β-caryophyllene oxide, and (C) furfural (preferably, all these three compounds)
(iii) at least two compounds selected from the group consisting of (A) 2-methyltetrahydrofuran-3-one, (B) β-caryophyllene oxide, and (C) furfural (preferably, all these three compounds)
(iv) at least two compounds selected from the group consisting of (A) α-angelicalactone, (B) β-caryophyllene oxide, and (C) furfural (preferably, all these three compounds)
(v) at least two compounds selected from the group consisting of (A) maltol, (B) β-caryophyllene oxide, and (C) furfural (preferably, all these three compounds)
(vi) at least two compounds selected from the group consisting of (A) 3-methyl-1,2-cyclohexanedione, (B) β-caryophyllene oxide, and (C) furfural (preferably, all these three compounds)
(vii) at least two compounds selected from the group consisting of (A) γ-dodecanolactone, (B) β-caryophyllene oxide, and (C) furfural (preferably, all these three compounds)
(viii) at least two compounds selected from the group consisting of (A) 5-dodecanolide, (B) β-caryophyllene oxide, and (C) furfural (preferably, all these three compounds)
(ix) at least two compounds selected from the group consisting of (A) 4,5-dimethyl-3-hydroxy-2,5-dihydrofuran-2-one, (B) β-caryophyllene oxide, and (C) furfural (preferably, all these three compounds)
(x) at least two compounds selected from the group consisting of (A) D-camphor, (B) β-caryophyllene oxide, and (C) furfural (preferably, all these three compounds)
(xi) at least two compounds selected from the group consisting of (A) cyclotene, (B) β-caryophyllene oxide, and (C) 2-acetylfuran (preferably, all these three compounds)
(xii) at least two compounds selected from the group consisting of (A) cyclotene, (B) β-caryophyllene oxide, and (C) 2-acetyl-5-methylfuran (preferably, all these three compounds)
(xiii) at least two compounds selected from the group consisting of (A) cyclotene, (B) β-caryophyllene oxide, and (C) 3-acetyl-2,5-dimethylfuran (preferably, all these three compounds)
(xiv) at least two compounds selected from the group consisting of (A) cyclotene, (B) β-caryophyllene oxide, and (C) furfuryl alcohol (preferably, all these three compounds)
(xv) at least two compounds selected from the group consisting of (A) cyclotene, (B) β-caryophyllene oxide, and (C) 1-furfurylpyrrole (preferably, all these three compounds)
(xvi) at least two compounds selected from the group consisting of (A) cyclotene, (B) β-caryophyllene oxide, and (C) furfuryl propionate (preferably, all these three compounds)
(xvii) at least two compounds selected from the group consisting of (A) cyclotene, (B) β-caryophyllene oxide, and (C) 5-methylfurfural (preferably, all these three compounds)
(xviii) at least two compounds selected from the group consisting of (A) cyclotene, (B) β-caryophyllene oxide, and (C) 5-(hydroxymethyl)furfural (preferably, all these three compounds)

The composition of the present invention may contain at least two compounds selected from the group consisting of (A) cyclotene, (B) β-caryophyllene oxide, and (C) furfural. The composition of the present invention may contain (A) cyclotene, (B) β-caryophyllene oxide, and (C) furfural.

When the composition of the present invention contains at least (A), the content of (A) in the composition of the present invention is generally not less than 0.001 wt%, preferably not less than 0.01 wt%, more preferably not less than 0.1 wt%, further preferably not less than 1 wt%, particularly preferably not less than 10 wt%, with respect to the composition of the present invention. When the composition of the present invention contains at least (A), the content of (A) in the composition of the present invention is generally not more than 99 wt%, preferably not more than 95 wt%, more preferably not more than 90 wt%, with respect to the composition of the present invention. When the composition of the present invention contains at least (A), the content of (A) in the composition of the present invention in one embodiment is generally 0.001 to 99 wt%, preferably 0.01 to 95 wt%, more preferably 0.1 to 90 wt%, with respect to the composition of the present invention.

When the composition of the present invention contains at least (B), the content of (B) in the composition of the present invention is generally not less than 0.001 wt%, preferably not less than 0.01 wt%, more preferably not less than 0.1 wt%, further preferably not less than 1 wt%, particularly preferably not less than 10 wt%, with respect to the composition of the present invention. When the composition of the present invention contains at least (B), the content of (B) in the composition of the present invention is generally not more than 99 wt%, preferably not more than 95 wt%, more preferably not more than 90 wt%, with respect to the composition of the present invention. When the composition of the present invention contains at least (B), the content of (B) in the composition of the present invention in one embodiment is generally 0.001 to 99 wt%, preferably 0.01 to 95 wt%, more preferably 0.1 to 90 wt%, with respect to the composition of the present invention.

When the composition of the present invention contains at least (C), the content of (C) in the composition of the present invention is generally not less than 0.001 wt%, preferably not less than 0.01 wt%, more preferably not less than 0.1 wt%, further preferably not less than 1 wt%, particularly preferably not less than 10 wt%, with respect to the composition of the present invention. When the composition of the present invention contains at least (C), the content of (C) in the composition of the present invention is generally not more than 99 wt%, preferably not more than 95 wt%, more preferably not more than 90 wt%, with respect to the composition of the present invention. When the composition of the present invention contains at least (C), the content of (C) in the composition of the present invention in one embodiment is generally 0.001 to 99 wt%, preferably 0.01 to 95 wt%, more preferably 0.1 to 90 wt%, with respect to the composition of the present invention.

When the composition of the present invention contains at least (A) and (B), the weight ratio of the content of (A) and the content of (B) (A:B) in the composition of the present invention is preferably 1:0.001 to 1000, more preferably 1:0.5 to 1000, still more preferably 1:1 to 500, further preferably 1:10 to 250, particularly preferably 1:25 to 100, most preferably 1:30 to 75, because the mouth-coating feel can be enhanced particularly effectively.

When the composition of the present invention contains at least (A) and (C), the weight ratio of the content of (A) and the content of (C) (A:C) in the composition of the present invention is preferably 1:0.001 to 1000, more preferably 1:0.5 to 1000, still more preferably 1:1 to 500, further preferably 1:10 to 250, particularly preferably 1:25 to 100, most preferably 1:30 to 75, because the mouth-coating feel can be enhanced particularly effectively.

When the composition of the present invention contains at least (B) and (C), the weight ratio of the content of (B) and the content of (C) (B:C) in the composition of the present invention is preferably 1:0.001 to 1000, more preferably 1:0.01 to 100, further preferably 1:0.02 to 50, particularly preferably 1:0.3 to 3, most preferably 1:0.5 to 2, because the mouth-coating feel can be enhanced particularly effectively.

In one embodiment, the composition of the present invention may contain all of (A), (B), and (C).

The form of the composition of the present invention is not particularly limited, and examples thereof include solid (including powder, granule, etc.), liquid (including slurry, etc.), gel, paste, and the like.

The composition of the present invention may consist only of at least two compounds selected from (A), (B), and (C), and may further contain, in addition to these, a conventional base according to the form and the like of the composition of the present invention.

When the composition of the present invention is in the form of liquid, examples of the base include water, ethanol, glycerin, propylene glycol, various animal and vegetable oils, and the like.

When the composition of the present invention is in the form of a solid, examples of the base include various saccharides such as starch, dextrin, cyclodextrin, sucrose, glucose or the like, protein, peptide, salt, solid fat, silicon dioxide, mixtures thereof, yeast fungus and various powder extracts and the like.

The composition of the present invention may further contain, for example, excipient, pH adjuster, antioxidant, thickening stabilizer, sweetener (e.g., sugars, etc.), acidulant, spices, colorant and the like, in addition to at least two compounds selected from (A), (B), and (C), as long as the purpose of the present invention is not impaired.

The composition of the present invention may be produced by a method conventionally used in the field of food flavoring. The composition of the present invention may undergo, for example, a concentration treatment, a dry treatment, a decolorization treatment and the like, each alone or in combination.

The composition of the present invention can be used by adding to foods. By adding the composition of the present invention to a food, the mouth-coating feel of the food can be enhanced. By adding the composition of the present invention to a food, the mouth-coating feel can be enhanced without imparting an off-flavor to the food. Therefore, the composition of the present invention may be preferably used as a flavoring composition for enhancing a mouth-coating feel of a food.

In the present invention, the "mouth-coating feel" is the sensation that the oral cavity is covered with a thin film, the sensation that the oral cavity is covered with oil or fat, or an oil or fat-like film, a smooth sensation that is felt in the oral cavity, and an oil or fat-like rich sensation (thickness) that spreads throughout the oral cavity, each of which is noticeably felt when a oil or fat, or a solution or food containing oil or fat is contained in the oral cavity. The "enhancement" of the mouth-coating feel means that at least one of the above-mentioned sensations is enhanced. The presence or absence and the degree of the mouth-coating feel can be evaluated by sensory evaluation by an expert panel.

In the present invention, the "off-flavor" refers to an unpleasant flavor (taste, aroma) that is not generally perceived in foods. The mode when an off-flavor is imparted to a food includes, for example, when a specific undesirable taste or aroma (e.g., chemical odor, etc.) is imparted, when the original taste and aroma of the food change unfavorably by adding a component that is not originally contained in the food, and the like. The presence or absence and the degree of the off-flavor can be evaluated by sensory evaluation by an expert panel.

In the present invention, the "food" is a concept that broadly includes those that can be ingested orally, and also includes, for example, beverages, seasonings, food additives, and the like.

The food to which the composition of the present invention is added may be originally provided (sold, distributed) in a state suitable for eating, or may be provided in a state requiring predetermined processing or cooking to reach a state suitable for eating. For example, the food to which the composition of the present invention may be added may be provided as a concentrate or the like that needs to be diluted with water or the like to reach a state suitable for eating.

The food to which the composition of the present invention is added is not particularly limited as long as it may be expected to show a mouth-coating feel. For example, foods containing oil or fat such as oil and fat (e.g., vegetable oil and fat, animal oil and fat, etc.), mayonnaise, soup (e.g., Ramen soup, consomme soup, chicken stock, etc.), dressing, curry, skin-wrapped food (e.g., Gyoza, Shumai, Wonton, Baozi, Xiaolongbao, Ravioli, Spring roll, etc.), cooked rice (e.g., fried rice, Paella, Pilaf, etc.), deep-fried food (e.g., Croquette, minced meat cutlet, etc.), hamburger steak, meatball, sausage, snacks, chocolate, cookie, bread, milk and dairy products containing oil or fat (e.g., raw milk, cow's milk, low-fat milk, cream, butter, margarine, fat spread, cheese, yogurt, etc.), gratin, beverages containing oil or fat, noodles containing oil or fat (e.g., fried noodles, Japanese thin wheat noodles containing oil or fat, etc.) or the like; and foods not containing oil and fat such as oil-free dressing, milk and dairy products not containing oil and fat (e.g., fat-free milk, skim milk powder, fat-free yogurt, etc.), beverages not containing oil and fat (e.g., coffee drinks, etc.), noodles not containing oil and fat (e.g., Japanese wheat noodles, Japanese buckwheat noodle, Japanese thin wheat noodles not containing oil and fat, non-fried noodles, raw noodles, pasta, dough sheet, frozen noodles, etc.) or the like can be mentioned. As used herein, the food containing oil or fat may contain only oil or fat, that is, the food containing oil or fat may be the oil or fat itself.

Since the composition of the present invention can remarkably enhance the mouth-coating feel felt when oil or fat is contained in the oral cavity, it is preferably used by adding to a food containing oil or fat. That is, the composition of the present invention is preferably for a food containing oil or fat.

The oil or fat contained in a food containing oil or fat to which the composition of the present invention can be applied is not particularly limited as long as it is edible. Examples include vegetable oils and fats such as rape seed oil, corn oil, soybean oil, sesame oil, rice oil, bran oil, safflower oil, coconut oil, palm oil, palm kernel oil, sunflower oil, perilla oil, perilla oil, flaxseed oil, olive oil, grapeseed oil, medium chain fatty acid oil or the like; animal oils and fats such as lard, beef tallow, chicken oil, mutton tallow, horse fat, fish oil, whale oil, butterfat or the like, and the like. In addition, transesterified oil obtained by transesterifying the aforementioned oils and fats, hydrogenated oil obtained by hydrogenating the aforementioned oils and fats, and the like can also be used. The aforementioned oils and fats may be refined (e.g., salad oil, etc.). These oils and fats may be used alone, or two or more kinds thereof may be used in combination.

The content of the oil or fat in a food containing oil or fat for which the composition of the present invention can be used is not particularly limited. It is preferably 0.1 to 100 wt%, more preferably 0.5 to 100 wt%, because the effect can be more clearly exhibited.

The method and the conditions for adding the composition of the present invention to a food are not particularly limited and can be appropriately determined according to the form of the composition of the present invention, the kind of the food, and the like. The timing of addition of the composition of the present invention to a food is not particularly limited and it may be added at any time point. For example, during the production of food, after the completion of food (immediately before eating food, during eating food, etc.) and the like can be mentioned. The composition of the present invention may be added to a raw material before production of a food.

When the composition of the present invention contains at least (A), the composition of the present invention is preferably to be added to a food such that the concentration of (A) (at times referred to as "a" or "concentration a of (A)" in the present specification) in the food falls within a specific range with respect to the total weight of the food to be eaten, since the composition can effectively enhance the mouth-coating feel without imparting an off-flavor to the food. Specifically, the concentration a of (A) in the food is preferably not less than 0.05 weight ppb, more preferably not less than 0.1 weight ppb, particularly preferably not less than 0.3 weight ppb, with respect to the total weight of the food to be eaten. In addition, the concentration a of (A) in the food is preferably not more than 5000 weight ppb, more preferably not more than 3000 weight ppb, particularly preferably not more than 1500 weight ppb, with respect to the total weight of the food to be eaten. In one embodiment, the concentration a of (A) in the food is preferably 0.05 - 5000 weight ppb, more preferably 0.1 - 3000 weight ppb, particularly preferably 0.3 - 1500 weight ppb, with respect to the total weight of the food to be eaten.

When the composition of the present invention contains at least (B), the composition of the present invention is preferably to be added to a food such that the concentration of (B) (at times referred to as "b" or "concentration b of (B)" in the present specification) in the food falls within a specific range with respect to the total weight of the food to be eaten, since the composition can effectively enhance the mouth-coating feel without imparting an off-flavor to the food. Specifically, the concentration b of (B) in the food is preferably not less than 0.1 weight ppb, more preferably not less than 0.5 weight ppb, particularly preferably not less than 1 weight ppb, with respect to the total weight of the food to be eaten. In addition, the concentration b of (B) in the food is preferably not more than 50000 weight ppb, more preferably not more than 10000 weight ppb, further preferably not more than 7000 weight ppb, particularly preferably not more than 6000 weight ppb, with respect to the total weight of the food to be eaten. In one embodiment, the concentration b of (B) in the food is preferably 0.1 - 50000 weight ppb, more preferably 0.5 - 10000 weight ppb, particularly preferably 1 - 6000 weight ppb, with respect to the total weight of the food to be eaten.

When the composition of the present invention contains at least (C), the composition of the present invention is preferably to be added to a food such that the concentration of (C) (at times referred to as "c" or "concentration c of (C)" in the present specification) in the food falls within a specific range with respect to the total weight of the food to be eaten, since the composition can effectively enhance the mouth-coating feel without imparting an off-flavor to the food. Specifically, the concentration c of (C) in the food is preferably not less than 0.1 weight ppb, more preferably not less than 0.5 weight ppb, particularly preferably not less than 1 weight ppb, with respect to the total weight of the food to be eaten. In addition, the concentration c of (C) in the food is preferably not more than 50000 weight ppb, more preferably not more than 10000 weight ppb, further preferably not more than 7000 weight ppb, particularly preferably not more than 6000 weight ppb, with respect to the total weight of the food to be eaten. In one embodiment, the concentration c of (C) in the food is preferably 0.1 - 50000 weight ppb, more preferably 0.5 - 10000 weight ppb, particularly preferably 1 - 6000 weight ppb, with respect to the total weight of the food to be eaten.

When the composition of the present invention contains at least (A) and (B), the composition of the present invention is preferably to be added to a food such that the weight ratio of the concentration a of (A) and the concentration b of (B) (a:b) in the food falls within a specific range, since the composition can particularly effectively enhance the mouth-coating feel without imparting an off-flavor to the food. Specifically, the weight ratio of the concentration a of (A) and the concentration b of (B) (a:b) in the food is preferably 1:0.001 to 1000, more preferably 1:0.5 to 1000, still more preferably 1:1 to 500, further preferably 1:10 to 250, particularly preferably 1:25 to 100, most preferably 1:30 to 75.

When the composition of the present invention contains at least (A) and (C), the composition of the present invention is preferably to be added to a food such that the weight ratio of the concentration a of (A) and the concentration c of (C) (a:c) in the food falls within a specific range, since the composition can particularly effectively enhance the mouth-coating feel without imparting an off-flavor to the food. Specifically, the weight ratio of the concentration a of (A) and the concentration c of (C) (a:c) in the food is preferably 1:0.001 to 1000, more preferably 1:0.5 to 1000, still more preferably 1:1 to 500, further preferably 1:10 to 250, particularly preferably 1:25 to 100, most preferably 1:30 to 75.

When the composition of the present invention contains at least (B) and (C), the composition of the present invention is preferably to be added to a food such that the weight ratio of the concentration b of (B) and the concentration c of (C) (b:c) in the food falls within a specific range, since the composition can particularly effectively enhance the mouth-coating feel without imparting an off-flavor to the food. Specifically, the weight ratio of the concentration b of (B) and the concentration c of (C) (b:c) in the food is preferably 1:0.001 to 1000, more preferably 1:0.01 to 100, further preferably 1:0.02 to 50, particularly preferably 1:0.3 to 3, most preferably 1:0.5 to 2.

The present invention also provides a food containing at least two compounds selected from the group consisting of
(A) a compound represented by the formula (I): 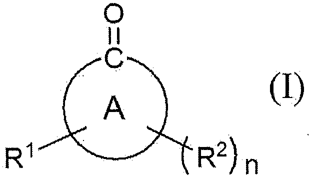 wherein
   ring A is a 5-membered or 6-membered, saturated or unsaturated, carbocycle or oxygen-containing or nitrogen-containing heterocycle;
   R¹ is an oxo group, a hydroxy group, an alkoxy group having 1 - 4 carbon atoms, an acyloxy group having 1 - 4 carbon atoms, a hydrocarbon group having 1 - 8 carbon atoms and optionally having substituent(s), or a hydrogen atom, and when R¹ is a hydrocarbon group having 1 - 8 carbon atoms and optionally having substituent(s), a carbon atom in the hydrocarbon group may be bonded to a carbon atom of ring A to form a crosslinked structure or a saturated or unsaturated ring structure;
   R² is a hydrocarbon group having 1 - 8 carbon atoms, a hydroxy group, or a hydrogen atom; and
   n is an integer of 1 to 3,
(B) β-caryophyllene oxide, and
(C) a compound represented by the formula (II):

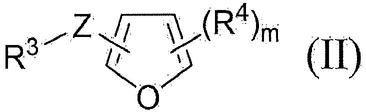

   wherein
   R³ is an acyl group having 1 - 6 carbon atoms, a hydroxy group, a pyrrole group, or an acyloxy group having 1 - 6 carbon atoms;
   Z is a single bond or an alkylene group having 1 - 6 carbon atoms;
   R⁴ is a substituent; and
   m is an integer of 0 to 3
(at times simply referred to as "the food of the present invention" in the present specification).

The (A), (B), and (C) that can be contained in the food of the present invention are similar to (A), (B), and (C) that can be contained in the composition of the present invention, and preferred embodiments are also the same.

At least two compounds selected from the group consisting of (A), (B), and (C) that are contained in the food of the present invention may be any of the above-mentioned (i) to (xviii).

The food of the present invention may contain at least two compounds selected from the group consisting of (A) cyclotene, (B) β-caryophyllene oxide, and (C) furfural. In addition, the food of the present invention may contain (A) cyclotene, (B) β-caryophyllene oxide, and (C) furfural.

When the food of the present invention contains at least (A), the concentration of (A) in the food of the present invention is preferably within a specific range with respect to the total weight of the food to be eaten, since the food of the present invention can effectively enhance the mouth-coating feel without an off-flavor. Specifically, the concentration of (A) in the food of the present invention can be set in the same manner as in the aforementioned concentration a of (A), and the preferred range is also the same.

When the food of the present invention contains at least (B), the concentration of (B) in the food of the present invention is preferably within a specific range with respect to the total weight of the food to be eaten, since the food of the present invention can effectively enhance the mouth-coating feel without an off-flavor. Specifically, the concentration of (B) in the food of the present invention can be set in the same manner as in the aforementioned concentration b of (B), and the preferred range is also the same.

When the food of the present invention contains at least (C), the concentration of (C) in the food of the present invention is preferably within a specific range with respect to the total weight of the food to be eaten, since the food of the present invention can effectively enhance the mouth-coating feel without an off-flavor. Specifically, the concentration of (C) in the food of the present invention can be set in the same manner as in the aforementioned concentration c of (C), and the preferred range is also the same.

When the food of the present invention contains at least (A) and (B), the weight ratio of the concentration of (A) and the concentration of (B) in the food of the present invention is preferably within a specific range, since the mouth-coating feel can be particularly effectively enhanced. Specifically, the weight ratio of the concentration of (A) and the concentration of (B) in the food of the present invention can be set in the same manner as in the aforementioned weight ratio of the concentration a of (A) and the concentration b of (B) (a:b), and the preferred range is also the same.

When the food of the present invention contains at least (A) and (C), the weight ratio of the concentration of (A) and the concentration of (C) in the food of the present invention is preferably within a specific range, since the mouth-coating feel can be particularly effectively enhanced. Specifically, the weight ratio of the concentration of (A) and the concentration of (C) in the food of the present invention can be set in the same manner as in the aforementioned weight ratio of the concentration a of (A) and the concentration c of (C) (a:c), and the preferred range is also the same.

When the food of the present invention contains at least (B) and (C), the weight ratio of the concentration of (B) and the concentration of (C) in the food of the present invention is preferably within a specific range, since the mouth-coating feel can be particularly effectively enhanced. Specifically, the weight ratio of the concentration of (B) and the concentration of (C) in the food of the present invention can be set in the same manner as in the aforementioned weight ratio of the concentration b of (B) and the concentration c of (C) (b:c), and the preferred range is also the same.

In one embodiment, the food of the present invention may contain all of (A), (B), and (C).

The kind of the food in the present invention is not particularly limited as long as it may be expected to show a mouth-coating feel. For example, those similar to the examples of the foods to which the composition of the present invention can be added can be mentioned, and the preferred ones are also the same.

The food of the present invention is preferably a food with an enhanced mouth-coating feel, more preferably, a food with an enhanced mouth-coating feel and free of an off-flavor.

In one embodiment, the food of the present invention may contain oil or fat. That is, the food of the present invention may be a food containing oil or fat. The food of the present invention may be a food containing oil or fat and having an enhanced mouth-coating feel, or a food containing oil or fat and having an enhanced mouth-coating feel and free of an off-flavor.

When the food of the present invention contains oil or fat (that is, when the food of the present invention is a food containing oil or fat), the oil or fat contained in the food of the present invention is not particularly limited as long as it is edible. For example, those similar to the examples of the oil or fat contained in oil- or fat-containing foods to which the composition of the present invention can be added can be mentioned, and the preferred ones are also the same.

When the food of the present invention contains oil or fat (that is, when the food of the present invention is a food containing oil or fat), the content of the oil or fat in the food of the present invention is not particularly limited. It is preferably 0.1 to 99.9 wt%, more preferably 0.5 to 99.5 wt%, because the effect can be more clearly exhibited.

The production method of the food of the present invention (sometimes simply referred to as "the production method of the present invention" in the present specification) includes adding at least two compounds selected from (A), (B), and (C).

The at least two compounds selected from the group consisting of (A), (B), and (C) to be added in the production method of the present invention may be any of the above-mentioned (i) to (xviii).

The production method of the present invention may include adding at least two compounds selected from the group consisting of (A) cyclotene, (B) β-caryophyllene oxide, and (C) furfural. In addition, the production method of the present invention may include adding (A) cyclotene, (B) β-caryophyllene oxide, and (C) furfural.

When the production method of the present invention includes addition of at least (A), the addition of (A) is preferably performed such that the concentration of (A) in the food falls within a specific range with respect to the total weight of the food to be eaten, since a food having an effectively enhanced mouth-coating feel and free of an off-flavor can be produced. Specifically, in the production method of the present invention, the concentration of (A) in the food can be set in the same manner as in the aforementioned concentration a of (A), and the preferred range is also the same.

When the production method of the present invention includes addition of at least (B), the addition of (B) is preferably performed such that the concentration of (B) in the food falls within a specific range with respect to the total weight of the food to be eaten, since a food having an effectively enhanced mouth-coating feel and free of an off-flavor can be produced. Specifically, in the production method of the present invention, the concentration of (B) in the food can be set in the same manner as in the aforementioned concentration b of (B), and the preferred range is also the same.

When the production method of the present invention includes addition of at least (C), the addition of (C) is preferably performed such that the concentration of (C) in the food falls within a specific range with respect to the total weight of the food to be eaten, since a food having an effectively enhanced mouth-coating feel and free of an off-flavor can be produced. Specifically, in the production method of the present invention, the concentration of (C) in the food can be set in the same manner as in the aforementioned concentration c of (C), and the preferred range is also the same.

When the production method of the present invention includes addition of at least (A) and (B), the addition of (A) and (B) is preferably performed such that the weight ratio of the concentration of (A) and the concentration of (B) in the food falls within a specific range, since a food having a particularly effectively enhanced mouth-coating feel can be produced. Specifically, in the production method of the present invention, the weight ratio of the concentration of (A) and the concentration of (B) in the food can be set in the same manner as in the aforementioned weight ratio of the concentration a of (A) and the concentration b of (B) (a:b), and the preferred range is also the same.

When the production method of the present invention includes addition of at least (A) and (C), the addition of (A) and (C) is preferably performed such that the weight ratio of the concentration of (A) and the concentration of (C) in the food falls within a specific range, since a food having a particularly effectively enhanced mouth-coating feel can be produced. Specifically, in the production method of the present invention, the weight ratio of the concentration of (A) and the concentration of (C) in the food can be set in the same manner as in the aforementioned weight ratio of the concentration a of (A) and the concentration c of (C) (a:c), and the preferred range is also the same.

When the production method of the present invention includes addition of at least (B) and (C), the addition of (B) and (C) is preferably performed such that the weight ratio of the concentration of (B) and the concentration of (C) in the food falls within a specific range, since a food having a particularly effectively enhanced mouth-coating feel can be produced. Specifically, in the production method of the present invention, the weight ratio of the concentration of (B) and the concentration of (C) in the food can be set in the same manner as in the aforementioned weight ratio of the concentration b of (B) and the concentration c of (C) (b:c), and the preferred range is also the same.

In the production method of the present invention, at least two compounds selected from (A), (B), and (C) may be individually added, or these compounds may be mixed in advance before addition and the obtained mixture may be added. Alternatively, these compounds may be added using the aforementioned composition of the present invention. When at least two compounds selected from (A), (B), and (C) are individually added, the order and intervals of addition are not particularly limited. For example, when adding (A) and (B), they may be added in the order of (A) and (B), or in the reverse order, or (A) and (B) may be added at the same time.

In one embodiment, the production method of the present invention may include adding all of (A), (B), and (C).

The production method of the present invention may include as appropriate a processing step and a cooking step conventionally used in food production, according to the kind and the like of the food to be produced, as well as addition of at least two compounds selected from (A), (B), and (C).

The production method of the present invention is preferably a method for producing a food with an enhanced mouth-coating feel, more preferably, a method for producing a food with an enhanced mouth-coating feel and free of an off-flavor.

In one embodiment, the production method of the present invention may be a method for producing a food containing oil or fat. The production method of the present invention may be a method for producing an oil- or fat-containing food having an enhanced mouth-coating feel, or a method for producing an oil- or fat-containing food having an enhanced mouth-coating feel and free of an off-flavor.

The present invention also provides a method for enhancing a mouth-coating feel, including adding at least two compounds selected from the group consisting of
(A) a compound represented by the formula (I):

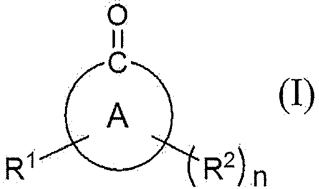

   wherein
   ring A is a 5-membered or 6-membered, saturated or unsaturated, carbocycle or oxygen-containing or nitrogen-containing heterocycle;
   R¹ is an oxo group, a hydroxy group, an alkoxy group having 1 - 4 carbon atoms, an acyloxy group having 1 - 4 carbon atoms, a hydrocarbon group having 1 - 8 carbon atoms and optionally having substituent(s), or a hydrogen atom, and when R¹ is a hydrocarbon group having 1 - 8 carbon atoms and optionally having substituent(s), a carbon atom in the hydrocarbon group may be bonded to a carbon atom of ring A to form a crosslinked structure or a saturated or unsaturated ring structure;
   R² is a hydrocarbon group having 1 - 8 carbon atoms, a hydroxy group, or a hydrogen atom; and
   n is an integer of 1 to 3,
(B) β-caryophyllene oxide, and
(C) a compound represented by the formula (II):

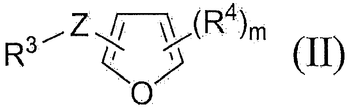

   wherein
   R³ is an acyl group having 1 - 6 carbon atoms, a hydroxy group, a pyrrole group, or an acyloxy group having 1 - 6 carbon atoms;
   Z is a single bond or an alkylene group having 1 - 6 carbon atoms;
   R⁴ is a substituent; and
   m is an integer of 0 to 3,
to a food (at times simply referred to as "the enhancing method of the present invention" in the present specification).

The (A), (B), and (C) that can be used in the enhancing method of the present invention are similar to (A), (B), and (C) that can be contained in the composition of the present invention, and preferred embodiments are also the same.

Unless otherwise specified, the enhancing method of the present invention can be performed in the same manner as the production method of the present invention.

In the enhancing method of the present invention, the method and the conditions for adding at least two compounds selected from (A), (B), and (C) are not particularly limited and can be appropriately determined according to the kind of the food to which the compounds are added, and the like. The timing of addition of at least two compounds selected from (A), (B), and (C) to a food is not particularly limited and they may be added at any time point. For example, during the production of a food, after the completion of a food (immediately before eating a food, during eating a food, etc.) and the like can be mentioned. At least two compounds selected from (A), (B), and (C) may be added to a food raw material before production of a food.

According to the enhancing method of the present invention, a mouth-coating feel of a food can be effectively enhanced. According to the enhancing method of the present invention, a mouth-coating feel of a food can be effectively enhanced without imparting an off-flavor to the food. The food whose mouth-coating feel can be enhanced by the enhancing method of the present invention is not particularly limited as long as it may be expected to show a mouth-coating feel. For example, those similar to the examples of the foods to which the composition of the present invention can be added can be mentioned, and the preferred ones are also the same.

The enhancing method of the present invention can remarkably enhance the mouth-coating feel felt when oil or fat is contained in the oral cavity. Thus, it is preferably a method for enhancing the mouth-coating feel of a food containing oil or fat.

The present invention is explained in more detail in the following by referring to Examples, but the present invention is not limited at all by these examples. In the present specification, the "%" and "ppb" mean "wt%" and "weight ppb" unless otherwise specified.

### [Example]

### [Example 1]

### <positive control and negative control>

As a positive control, general commercially available mayonnaise (manufactured by Ajinomoto Co., Inc., trade name "Pure Select (registered trade mark) mayonnaise", oil and fat content: 73%) was used. As a negative control (NC), commercially available mayonnaise (manufactured by Ajinomoto Co., Inc., trade name "Pure Select (registered trade mark) KOKUUMA (registered trade mark) 65% Calorie Cut", oil and fat content: 23%) with a smaller oil and fat content as compared with positive control mayonnaise was used.

### <Production of experimental samples>

### (experimental plots 1-1 to 1-39)

Experimental samples were produced by adding at least one compound selected from cyclotene, β-caryophyllene oxide, and furfural to the aforementioned commercially available mayonnaise (manufactured by Ajinomoto Co., Inc., trade name "Pure Select (registered trade mark) KOKUUMA (registered trade mark) 65% Calorie Cut", oil and fat content: 23%) used as the negative control, such that the concentration of each compound in the food (mayonnaise) was a concentration shown in the following Tables 1 to 3 (in the following, each experimental sample is also to be referred to as "sample of experimental plot 1-1" to "sample of experimental plot 1-39").

### (control plot 1)

Cyclotene, octanoic acid, and isovaleric acid were added to the aforementioned commercially available mayonnaise (manufactured by Ajinomoto Co., Inc., trade name "Pure Select (registered trade mark) KOKUUMA (registered trade mark) 65% Calorie Cut", oil and fat content: 23%) used as the negative control, such that the concentration of cyclotene in the food (mayonnaise) was 100 weight ppb, the concentration of octanoic acid was 200 weight ppb, and the concentration of isovaleric acid was 100 weight ppb to produce the sample of control plot 1.

### <sensory evaluation>

A sensory evaluation was performed on the strength of mouth-coating feel of experimental samples, and the presence or absence of off-flavor.

For the evaluation of a mouth-coating feel, a panel of 4 experts ate each mayonnaise of positive control, negative control and experimental sample (samples of experimental plots 1-1 to 1-39 and control plot 1), and graded each experimental sample in 0.1 point increments (non-blind) in the range of 0.0 to 5.0 points, with the positive control being 5.0 points and the negative control being 0.0 point, by averaging the obtained scores of the panel of 4 experts. When the score was 1.0 or more, it was determined that there was an effect of enhancing the mouth-coating feel. The panel of 4 experts was trained in advance so that they have common understanding as to the degree of change in the mouth-coating feel that is required to change the score by 0.1 point.

For the evaluation of an off-flavor, a panel of 4 experts ate each mayonnaise of experimental samples, and the presence or absence of off-flavor (taste and aroma not originally found in mayonnaise, such as chemical odor) was evaluated by consensus based on the following criteria (non-blind).

### (Evaluation criteria of off-flavor)

++: off-flavor is present
+: slight off-flavor is present
-: off-flavor is absent

The results are shown in the following Tables 1 to 3.

**[Table 1]**

| <single component> | | | | | |
|---|---|---|---|---|---|
| | concentration in food (weight ppb) | | | score (points) | off-flavor |
| | (A) cyclotene | (B) β-caryophyllene oxide | (C) furfural | | |
| NC | 0 | 0 | 0 | 0.0 | - |
| PC | 0 | 0 | 0 | 5.0 | - |
| experimental plot | | | | | |
| 1-1 | 10 | 0 | 0 | 0.5 | - |
| 1-2 | 100 | 0 | 0 | 0.8 | - |
| 1-3 | 1000 | 0 | 0 | 0.9 | - |
| 1-4 | 10000 | 0 | 0 | 0.9 | + |
| 1-5 | 100000 | 0 | 0 | 0.9 | ++ |
| 1-6 | 0 | 10 | 0 | 1.2 | - |
| 1-7 | 0 | 100 | 0 | 1.3 | - |
| 1-8 | 0 | 500 | 0 | 1.5 | - |
| 1-9 | 0 | 1000 | 0 | 1.7 | - |
| 1-10 | 0 | 5000 | 0 | 1.8 | - |
| 1-11 | 0 | 10000 | 0 | 1.9 | + |
| 1-12 | 0 | 100000 | 0 | 1.7 | ++ |
| 1-13 | 0 | 0 | 10 | 0.1 | - |
| 1-14 | 0 | 0 | 100 | 0.2 | - |
| 1-15 | 0 | 0 | 500 | 0.3 | - |
| 1-16 | 0 | 0 | 1000 | 0.3 | - |
| 1-17 | 0 | 0 | 5000 | 0.4 | - |
| 1-18 | 0 | 0 | 10000 | 0.2 | + |
| 1-19 | 0 | 0 | 100000 | 0.2 | ++ |

**[Table 2]**

| <two components> | | | | | |
|---|---|---|---|---|---|
| experimental plot | concentration in food (weight ppb) | | | score (points) | off-flavor |
| | (A) cyclotene | (B) β-caryophyllene oxide | (C) furfural | | |
| 1-20 | 10 | 500 | 0 | 3.2 | - |
| 1-21 | 10 | 0 | 500 | 2.5 | - |
| 1-22 | 0 | 500 | 500 | 2.2 | - |
| 1-23 | 10 | 5000 | 0 | 3.1 | - |
| 1-24 | 10 | 0 | 5000 | 2.8 | - |
| 1-25 | 0 | 5000 | 5000 | 2.9 | - |
| 1-26 | 10 | 10 | 0 | 2.7 | - |
| 1-27 | 10 | 0 | 10 | 2.3 | - |
| 1-28 | 0 | 10 | 10 | 2.2 | - |

**[Table 3]**

| <three components> | | | | | |
|---|---|---|---|---|---|
| experimental plot | concentration in food (weight ppb) | | | score (points) | off-flavor |
| | (A) cyclotene | (B) β-caryophyllene oxide | (C) furfural | | |
| 1-29 | 1 | 50 | 50 | 3.7 | - |
| 1-30 | 10 | 10 | 10 | 4.0 | - |
| 1-31 | 10 | 500 | 10 | 4.3 | - |
| 1-32 | 10 | 10 | 500 | 4.0 | - |
| 1-33 | 10 | 500 | 500 | 4.7 | - |
| 1-34 | 10 | 5000 | 10 | 4.8 | - |
| 1-35 | 10 | 10 | 5000 | 4.5 | - |
| 1-36 | 10 | 5000 | 5000 | 4.5 | - |
| 1-37 | 100 | 5000 | 5000 | 4.8 | - |
| 1-38 | 1000 | 1000 | 1000 | 4.8 | - |
| 1-39 | 1000 | 5000 | 5000 | 4.1 | - |
| control plot | cyclotene | octanoic acid | isovaleric acid | | |
| 1 | 100 | 200 | 100 | 0.8 | - |

As is clear from the results of Tables 1 to 3, the samples of the experimental plots 1-20 to 1-39 of the present invention, containing at least two compounds selected from the group consisting of cyclotene, β-caryophyllene oxide, and furfural all showed an effectively enhanced mouth-coating feel. These experimental samples did not have an off-flavor.

From these results, it was confirmed that the addition of at least two compounds selected from the group consisting of cyclotene, β-caryophyllene oxide, and furfural to a food can effectively enhance a mouth-coating feel without imparting an off-flavor to the food.

### [Example 2]

At least one compound selected from cyclotene, β-caryophyllene oxide, and furfural was added to coffee beverages prepared using instant coffee powder, and a sensory evaluation was performed on a mouth-coating feel.

Specifically, coffee beverages were first produced using instant coffee powder produced by spray drying a hot water extract of roasted coffee beans, creaming powder, skim milk powder, sugar, and hot water, and according to the formulations described in the following Table 4. Commercially available products were used for creaming powder, skim milk powder, and sugar. Then, Experimental samples were produced by adding at least one compound selected from cyclotene, β-caryophyllene oxide, and furfural to the coffee beverages such that the concentration of each compound in the food (coffee beverages) was a concentration shown in the following Table 5 (in the following, each is to be referred to as "sample of experimental plot 2-1" to "sample of experimental plot 2-8"). A panel of 3 experts performed a sensory evaluation by grading each experimental sample in 0.5 point increments by consensus in the range of 0.0 to 5.0 points based on the following criteria, with the coffee beverages without addition of any compound (negative control) being "0.0 point". When the score was 1.0 or more, it was determined that there was an effect of enhancing the mouth-coating feel. The panel of 3 experts was trained in advance so that they have common understanding as to the degree of change in the mouth-coating feel that is required to change the score by 0.5 points.

### (Evaluation criteria of mouth-coating feel)

5.0 points: sufficient mouth-coating feel is present
2.5 points: certain mouth-coating feel is present
1.0 point: slight mouth-coating feel is present

**[Table 4]**

| starting material | amount (g) |
|---|---|
| instant coffee powder | 0.7 |
| creaming powder | 3.2 |
| skim milk powder | 0.3 |
| sugar | 3.0 |
| hot water | 92.8 |
| total | 100.0 |

**[Table 5]**

| component number | experimental plot | concentration in the food (weight ppb) | | | score (points) |
|---|---|---|---|---|---|
| | | (A) cyclotene | (B) β-caryophyllene oxide | (C) furfural | |
| NC | | 0 | 0 | 0 | 0.0 |
| single component | 2-1 | 1 | 0 | 0 | 0.0 |
| | 2-2 | 0 | 50 | 0 | 1.0 |
| | 2-3 | 0 | 0 | 50 | 0.0 |
| two components | 2-4 | 1 | 50 | 0 | 1.5 |
| | 2-5 | 1 | 0 | 50 | 2.5 |
| | 2-6 | 0 | 50 | 50 | 2.0 |
| three components | 2-7 | 0.5 | 25 | 25 | 1.5 |
| | 2-8 | 1 | 50 | 50 | 4.0 |

As is clear from the results of Table 5, the samples of the experimental plots 2-4 to 2-8 of the present invention, containing at least two compounds selected from the group consisting of cyclotene, β-caryophyllene oxide, and furfural all showed an effectively enhanced mouth-coating feel. An off-flavor was not confirmed in the samples of the experimental plots 2-1 to 2-8.

From these results, it was confirmed that the addition of at least two compounds selected from the group consisting of cyclotene, β-caryophyllene oxide, and furfural to a food can effectively enhance a mouth-coating feel.

### [Example 3]

At least one compound selected from cyclotene, β-caryophyllene oxide, and furfural was added to instant noodles, and a sensory evaluation was performed on a mouth-coating feel.

Specifically, instant noodles (manufactured by Toyo Suisan Kaisha, Ltd., trade name "Mendukuri Awasemiso": containing vegetable oils and fats and animal oils and fats (lard)) were first prepared according to the explanation described in the product package. Then, Experimental samples were produced by adding at least one compound selected from cyclotene, β-caryophyllene oxide, and furfural to the soup section of the instant noodles such that the concentration of each compound in the food (soup section) was a concentration shown in the following Table 6 (in the following, each is to be referred to as "sample of experimental plot 3-1" to "sample of experimental plot 3-10"). A panel of 2 experts performed a sensory evaluation by grading each experimental sample in 0.5 point increments by consensus in the range of 0.0 to 5.0 points based on the following criteria, with the soup of the instant noodles without addition of any compound (negative control) being "0.0 point". When the score was 1.0 or more, it was determined that there was an effect of enhancing the mouth-coating feel. The panel of 2 experts was trained in advance so that they have common understanding as to the degree of change in the mouth-coating feel that is required to change the score by 0.5 points.

### (Evaluation criteria of mouth-coating feel)

5.0 points: sufficient mouth-coating feel is present
3.0 points: certain mouth-coating feel is present
1.0 point: slight mouth-coating feel is present

**[Table 6]**

| component number | experimental plot | concentration in the food (weight ppb) | | | score (points) |
|---|---|---|---|---|---|
| | | (A) cyclotene | (B) β-caryophyllene oxide | (C) furfural | |
| NC | | 0 | 0 | 0 | 0.0 |
| single component | 3-1 | 100 | 0 | 0 | 0.5 |
| | 3-2 | 0 | 5000 | 0 | 1.0 |
| | 3-3 | 0 | 0 | 5000 | 0.5 |
| two components | 3-4 | 100 | 5000 | 0 | 3.0 |
| | 3-5 | 100 | 0 | 5000 | 2.0 |
| | 3-6 | 0 | 5000 | 5000 | 2.0 |
| three components | 3-7 | 100 | 5000 | 5000 | 5.0 |
| | 3-8 | 50 | 2500 | 2500 | 4.5 |
| | 3-9 | 16.7 | 800 | 800 | 4.0 |
| | 3-10 | 16.7 | 800 | 400 | 3.5 |

### [Example 4]

At least one compound selected from cyclotene, β-caryophyllene oxide, and furfural was added to instant noodles, and a sensory evaluation was performed on a mouth-coating feel.

Specifically, instant noodles (manufactured by SANYO FOODS Co., Ltd., trade name "Sapporo Ichiban Miso Ramen Donburi": containing vegetable oils and fats) were first prepared according to the explanation described in the product package. Then, Experimental samples were produced by adding at least one compound selected from cyclotene, β-caryophyllene oxide, and furfural to the soup section of the instant noodles such that the concentration of each compound in the food (soup section) was a concentration shown in the following Table 7 (in the following, each is to be referred to as "sample of experimental plot 4-1" to "sample of experimental plot 4-10"). A panel of 2 experts performed a sensory evaluation by grading each experimental sample in 0.5 point increments by consensus in the range of 0.0 to 5.0 points based on the following criteria, with the soup of the instant noodles without addition of any compound (negative control) being "0.0 point". When the score was 1.0 or more, it was determined that there was an effect of enhancing the mouth-coating feel. The panel of 2 experts was trained in advance so that they have common understanding as to the degree of change in the mouth-coating feel that is required to change the score by 0.5 points.

### (Evaluation criteria of mouth-coating feel)

5.0 points: sufficient mouth-coating feel is present
3.0 points: certain mouth-coating feel is present
1.0 point: slight mouth-coating feel is present

**[Table 7]**

| component number | experimental plot | concentration in the food (weight ppb) | | | score (points) |
|---|---|---|---|---|---|
| | | (A) cyclotene | (B) β-caryophyllene oxide | (C) furfural | |
| NC | | 0 | 0 | 0 | 0.0 |
| single component | 4-1 | 100 | 0 | 0 | 0.5 |
| | 4-2 | 0 | 5000 | 0 | 1.0 |
| | 4-3 | 0 | 0 | 5000 | 0.5 |
| two components | 4-4 | 100 | 5000 | 0 | 3.0 |
| | 4-5 | 100 | 0 | 5000 | 2.0 |
| | 4-6 | 0 | 5000 | 5000 | 2.0 |
| three components | 4-7 | 100 | 5000 | 5000 | 5.0 |
| | 4-8 | 50 | 2500 | 2500 | 4.5 |
| | 4-9 | 16.7 | 800 | 800 | 4.0 |
| | 4-10 | 16.7 | 800 | 400 | 3.5 |

As is clear from the results of Table 6 and Table 7, the samples of the experimental plots 3-4 to 3-10 and experimental plots 4-4 to 4-10 of the present invention, containing at least two compounds selected from the group consisting of cyclotene, β-caryophyllene oxide, and furfural all showed an effectively enhanced mouth-coating feel. An off-flavor was not confirmed in the samples of the experimental plots 3-4 to 3-10 and experimental plots 4-4 to 4-10.

From these results, it was confirmed that the addition of at least two compounds selected from the group consisting of cyclotene, β-caryophyllene oxide, and furfural to a food can effectively enhance a mouth-coating feel.

### [Example 5]

### <positive control and negative control>

The same commercially available mayonnaise as in Example 1 was used as the positive control and the negative control.

### <Production of experimental samples>

Experimental samples were produced by adding at least one compound selected from compound (I) shown in the following Table 8 (any of cyclotene, γ-butyrolactone, 2-methyltetrahydrofuran-3-one, α-angelicalactone, maltol, 3-methyl-1,2-cyclohexanedione, γ-dodecanolactone, 5-dodecanolide, 4,5-dimethyl-3-hydroxy-2,5-dihydrofuran-2-one, and D-camphor), β-caryophyllene oxide, and furfural to the aforementioned commercially available mayonnaise (manufactured by Ajinomoto Co., Inc., trade name "Pure Select (registered trade mark) KOKUUMA (registered trade mark) 65% Calorie Cut", oil and fat content: 23%) used as the negative control. Compound (I) was added such that the concentration of compound (I) in the food (mayonnaise) was 10 weight ppb, β-caryophyllene oxide was added such that the concentration of β-caryophyllene oxide in the food (mayonnaise) was 500 weight ppb, and furfural was added such that the concentration of furfural in the food (mayonnaise) was 500 weight ppb.

### <sensory evaluation>

A sensory evaluation was performed on the strength of mouth-coating feel of experimental samples in the same manner as in Example 1. The results are shown in the following Table 8.

**[Table 8]**

| | strength of mouth-coating feel | | | |
|---|---|---|---|---|
| kind of compound (I) used | single component | two components | | three components |
| | compound (I) | compound (I) and β-caryophyllene oxide | compound (I) and furfural | compound (I), β-caryophyllene oxide and furfural |
| cyclotene | 0.5 | 3.2 | 2.5 | 4.7 |
| γ-butyrolactone | 0.5 | 3.2 | 2.2 | 4.2 |
| 2-methyltetrahydrofuran-3-one | 0.5 | 3.2 | 2.4 | 4.2 |
| α-angelicalactone | 0.5 | 2.9 | 2.3 | 4.2 |
| maltol | 0.4 | 3.0 | 2.3 | 4.2 |
| 3-methyl-1,2-cyclohexanedione | 0.5 | 3.0 | 2.3 | 4.4 |
| γ-dodecanolactone | 0.4 | 3.0 | 2.4 | 4.3 |
| 5-dodecanolide | 0.5 | 3.2 | 2.4 | 4.2 |
| 4,5-dimethyl-3-hydroxy-2,5-dihydrofuran-2-one | 0.3 | 2.9 | 2.3 | 4.2 |
| D-camphor | 0.4 | 3.1 | 2.6 | 4.2 |
| no use of compound (I) | | single component | | two components |
| | | β-caryophyllene oxide | furfural | β-caryophyllene oxide and furfural |
| | | 1.5 | 0.3 | 2.2 |

As is clear from the results of Table 8, the experimental samples of the present invention, containing at least two compounds selected from the group consisting of compound (I) (any of cyclotene, γ-butyrolactone, 2-methyltetrahydrofuran-3-one, α-angelicalactone, maltol, 3-methyl-1,2-cyclohexanedione, γ-dodecanolactone, 5-dodecanolide, 4,5-dimethyl-3-hydroxy-2,5-dihydrofuran-2-one, and D-camphor), β-caryophyllene oxide, and furfural all showed an effectively enhanced mouth-coating feel. These experimental samples did not have an off-flavor.

From these results, it was confirmed that the addition of at least two compounds selected from the group consisting of compound (I), β-caryophyllene oxide, and furfural to a food can effectively enhance a mouth-coating feel without imparting an off-flavor to the food.

### [Example 6]

### <positive control and negative control>

The same commercially available mayonnaise as in Example 1 was used as the positive control and the negative control.

### <Production of experimental samples>

Experimental samples were produced by adding at least one compound selected from compound (II) shown in the following Table 9 (any of furfural, 2-acetylfuran, 2-acetyl-5-methylfuran, 3-acetyl-2,5-dimethylfuran, furfuryl alcohol, 1-furfurylpyrrole, furfuryl propionate, 5-methylfurfural, and 5-(hydroxymethyl)furfural), β-caryophyllene oxide, and cyclotene to the aforementioned commercially available mayonnaise (manufactured by Ajinomoto Co., Inc., trade name "Pure Select (registered trade mark) KOKUUMA (registered trade mark) 65% Calorie Cut", oil and fat content: 23%) used as the negative control. Compound (II) was added such that the concentration of compound (I) in the food (mayonnaise) was 10 weight ppb, β-caryophyllene oxide was added such that the concentration of β-caryophyllene oxide in the food (mayonnaise) was 500 weight ppb, and cyclotene was added such that the concentration of cyclotene in the food (mayonnaise) was 500 weight ppb.

### <sensory evaluation>

A sensory evaluation was performed on the strength of mouth-coating feel of experimental samples in the same manner as in Example 1. The results are shown in the following Table 9.

**Table 9]**

| | strength of mouth-coating feel | | | |
|---|---|---|---|---|
| kind of compound (II) used | single component | two components | | three components |
| | compound (II) | compound (II) and β-caryophyllene oxide | compound (II) and cyclotene | compound (II), β-caryophyllene oxide, and cyclotene |
| furfural | 0.3 | 2.2 | 2.2 | 4.7 |
| 2-acetylfuran | 0.2 | 2.0 | 2.4 | 4.3 |
| 2-acetyl-5-methylfuran | 0.2 | 2.2 | 2.2 | 4.4 |
| 3-acetyl-2,5-dimethylfuran | 0.2 | 2.0 | 2.5 | 4.2 |
| furfuryl alcohol | 0.1 | 2.0 | 2.2 | 4.1 |
| 1-furfurylpyrrole | 0.2 | 2.2 | 2.4 | 4.1 |
| furfuryl propionate | 0.2 | 2.2 | 2.4 | 4.3 |
| 5-methylfurfural | 0.2 | 2.1 | 2.4 | 4.2 |
| 5-(hydroxymethyl)furfural | 0.2 | 2.2 | 2.5 | 4.3 |
| no use of compound (II) | | single component | | two components |
| | | β-caryophyllene oxide | cyclotene | β-caryophyllene oxide and cyclotene |
| | | 1.5 | 0.5 | 3.2 |

As is clear from the results of Table 9, the experimental samples of the present invention containing at least two compounds selected from the group consisting of compound (II) (any of furfural, 2-acetylfuran, 2-acetyl-5-methylfuran, 3-acetyl-2,5-dimethylfuran, furfuryl alcohol, 1-furfurylpyrrole, furfuryl propionate, 5-methylfurfural, and 5-(hydroxymethyl)furfural), β-caryophyllene oxide, and cyclotene all showed an effectively enhanced mouth-coating feel. These experimental samples did not have an off-flavor.

From these results, it was confirmed that the addition of at least two compounds selected from the group consisting of compound (II), β-caryophyllene oxide, and furfural to a food can effectively enhance a mouth-coating feel without imparting an off-flavor to the food.

### [Example 7]

### <Production of instant noodles of control plot 1>

Sodium chloride (1.6 parts by weight), potassium carbonate (food additive grade, 0.1 parts by weight) and sodium carbonate (food additive grade, 0.1 parts by weight) were dissolved in water (35 parts by weight), the obtained aqueous solution (to be referred to as "kneading water" in the following, 36.8 parts by weight) was added to wheat flour (all purpose flour, 100 parts by weight), and the mixture was kneaded for 5 min. The obtained noodle dough was made into a sheet (thickness: 1.310.1 mm) using an electric pasta machine (manufactured by Imperia, RM-220), the both ends were cut off, and the sheet was cut into width 1 mm, length 30 cm and stored frozen at -20°C. The obtained frozen noodles were steamed with vapor at 98°C for 10 min using a steaming machine. To 100 g of the steamed noodles was added 30 g of 4 wt% salt solution heated to around 50°C to confer a taste to the noodles. The seasoned noodles were fried in frying oil at 150°C for 3.5 min in a fryer and cooled to room temperature to obtain instant noodles (the instant noodles are to be referred to as "instant noodles of control plot 1" in the following). As the frying oil, a mixture of lard and palm oil (lard: 50 wt%, palm oil: 50 wt%) was used. The instant noodles were stored in refrigerator at 5°C until use.

### <Production of instant noodles of control plot 2>

Instant noodles were produced in the same manner as in control plot 1 except that lard (lard: 100 wt%) was used as a frying oil instead of a mixture of lard and palm oil (lard: 50 wt%, palm oil: 50 wt%) (the instant noodles are to be referred to as "instant noodles of control plot 2" in the following).

### <Production of instant noodles of experimental plot 1>

Instant noodles were produced in the same manner as in control plot 1 except that cyclotene and β-caryophyllene oxide were further dissolved in water in addition to sodium chloride, potassium carbonate and sodium carbonate in the preparation of kneading water (the instant noodles are to be referred to as "instant noodles of control plot 1" in the following). Cyclotene was used such that the concentration of cyclotene in the produced instant noodles was 376 weight ppb, and β-caryophyllene oxide was used such that the concentration of β-caryophyllene oxide in the produced instant noodles was 18751 weight ppb.

### <Production of instant noodles of experimental plot 2>

Instant noodles were produced in the same manner as in control plot 1 except that β-caryophyllene oxide and furfural were further dissolved in water in addition to sodium chloride, potassium carbonate and sodium carbonate in the preparation of kneading water (the instant noodles are to be referred to as "instant noodles of control plot 2" in the following). β-caryophyllene oxide was used such that the concentration of β-caryophyllene oxide in the produced instant noodles was 18751 weight ppb and furfural was used such that the concentration of furfural in the produced instant noodles was 18751 weight ppb.

### <Production of instant noodles of experimental plot 3>

Instant noodles were produced in the same manner as in control plot 1 except that cyclotene and furfural were further dissolved in water in addition to sodium chloride, potassium carbonate and sodium carbonate in the preparation of kneading water (the instant noodles are to be referred to as "instant noodles of control plot 3" in the following). Cyclotene was used such that the concentration of cyclotene in the produced instant noodles was 376 weight ppb and furfural was used such that the concentration of furfural in the produced instant noodles was 18751 weight ppb.

### <Production of instant noodles of experimental plot 4>

Instant noodles were produced in the same manner as in control plot 1 except that cyclotene, β-caryophyllene oxide, and furfural were further dissolved in water in addition to sodium chloride, potassium carbonate and sodium carbonate in the preparation of kneading water (the instant noodles are to be referred to as "instant noodles of control plot 4" in the following). Cyclotene was used such that the concentration of cyclotene in the produced instant noodles was 376 weight ppb, β-caryophyllene oxide was used such that the concentration of β-caryophyllene oxide in the produced instant noodles was 18751 weight ppb, and furfural was used such that the concentration of furfural in the produced instant noodles was 18751 weight ppb.

### <Production of instant noodles of experimental plot 5>

Instant noodles were produced in the same manner as in control plot 1 except that cyclotene, β-caryophyllene oxide, and furfural were further dissolved in water in addition to sodium chloride, potassium carbonate and sodium carbonate in the preparation of kneading water (the instant noodles are to be referred to as "instant noodles of control plot 5" in the following). Cyclotene was used such that the concentration of cyclotene in the produced instant noodles was 470 weight ppb, β-caryophyllene oxide was used such that the concentration of β-caryophyllene oxide in the produced instant noodles was 23438 weight ppb, and furfural was used such that the concentration of furfural in the produced instant noodles was 23438 weight ppb.

### <Production of instant noodles of experimental plot 6>

Instant noodles were produced in the same manner as in control plot 1 except that cyclotene, β-caryophyllene oxide, and furfural were further dissolved in water in addition to sodium chloride, potassium carbonate and sodium carbonate in the preparation of kneading water (the instant noodles are to be referred to as "instant noodles of control plot 6" in the following). Cyclotene was used such that the concentration of cyclotene in the produced instant noodles was 564 weight ppb, β-caryophyllene oxide was used such that the concentration of β-caryophyllene oxide in the produced instant noodles was 28126 weight ppb, and furfural was used such that the concentration of furfural in the produced instant noodles was 28126 weight ppb.

### <Production of instant noodles of comparison plot 1>

Instant noodles were produced in the same manner as in control plot 1 except that cyclotene was further dissolved in water in addition to sodium chloride, potassium carbonate and sodium carbonate in the preparation of kneading water (the instant noodles are to be referred to as "instant noodles of comparison plot 1" in the following). Cyclotene was used such that the concentration of cyclotene in the produced instant noodles was 376 weight ppb.

### <Production of instant noodles of comparison plot 2>

Instant noodles were produced in the same manner as in control plot 1 except that β-caryophyllene oxide was further dissolved in water in addition to sodium chloride, potassium carbonate and sodium carbonate in the preparation of kneading water (the instant noodles are to be referred to as "instant noodles of comparison plot 2" in the following). β-caryophyllene oxide was used such that the concentration of β-caryophyllene oxide in the produced instant noodles was 18751 weight ppb.

### <Production of instant noodles of comparison plot 3>

Instant noodles were produced in the same manner as in control plot 1 except that furfural was further dissolved in water in addition to sodium chloride, potassium carbonate and sodium carbonate in the preparation of kneading water (the instant noodles are to be referred to as "instant noodles of comparison plot 3" in the following). Furfural was used such that the concentration of furfural in the produced instant noodles was 18751 weight ppb.

### <sensory evaluation>

A sensory evaluation was performed on the strength of mouth-coating feel of respective instant noodles of control plots 1 and 2, experimental plots 1 to 6, and comparison plots 1 to 3.

Specifically, ramen was prepared by boiling respective instant noodles for 3.5 min in 250 g of hot water, and adding a soup powder (4.2 g) attached to commercially available instant noodles (manufactured by Toyo Suisan Kaisha, Ltd., trade name "Gekimen Wonton-men"). A panel of 4 experts ate each ramen, graded each ramen in 0.5 point increments (non-blind) in the range of 0.0 to 5.0 points based on the following criteria, with the ramen prepared from the instant noodles of control plot 1 being "0.0 points" and the ramen prepared from the instant noodles of control plot 2 being "5.0 point", and evaluated by averaging the obtained scores of the panel of 4 experts. When the score was 1 or more, it was determined that there was an effect of enhancing the mouth-coating feel. The panel of 4 experts was trained in advance so that they have common understanding as to the degree of change in the mouth-coating feel that is required to change the score by 0.5 point.

### (Evaluation criteria of mouth-coating feel)

5.0 points: sufficient mouth-coating feel is present
3.0 points: certain mouth-coating feel is present
1.0 point: slight mouth-coating feel is present

The results are shown in the following Table 10.

**[Table 10]**

| control plot 1 | control plot 2 | comparison plot 1 | | comparison plot 2 | | comparison plot 3 | |
|---|---|---|---|---|---|---|---|
| 0.0 | 5.0 | 0.0 | | 1.0 | | 0.0 | |
| | | | | | | | |

| experimental plot 1 | experimental plot 2 | experimental plot 3 | experimental plot 4 | | experimental plot 5 | | experimental plot 6 |
|---|---|---|---|---|---|---|---|
| 2.0 | 2.0 | 1.5 | 3.5 | | 4.0 | | 4.5 |

As is clear from the results of Table 10, the instant noodles of the experimental plots 1 to 6 of the present invention, containing at least two compounds selected from the group consisting of cyclotene, β-caryophyllene oxide, and furfural all showed an effectively enhanced mouth-coating feel. These instant noodles did not have an off-flavor.

From these results, it was confirmed that the addition of at least two compounds selected from the group consisting of cyclotene, β-caryophyllene oxide, and furfural to a food can effectively enhance a mouth-coating feel without imparting an off-flavor to the food.

### [Industrial Applicability]

According to the present invention, a flavoring composition capable of effectively enhancing a mouth-coating feel can be provided. Also, according to the present invention, a flavoring composition capable of effectively enhancing a mouth-coating feel without imparting an off-flavor to a food can be provided.

According to the present invention, a food with an effectively enhanced mouth-coating feel, and a production method thereof can be provided. Also, according to the present invention, a food with an effectively enhanced mouth-coating feel and free of an off-flavor, and a production method thereof can be provided.

According to the present invention, a method capable of effectively enhancing a mouth-coating feel can be provided. Also, according to the present invention, a method capable of effectively enhancing a mouth-coating feel without imparting an off-flavor to a food can be provided.

This application is based on a patent application No. 2020-152965 filed in Japan (filing date: September 11, 2020), the contents of which are incorporated in full herein.

## Claims

1. A flavoring composition comprising at least two compounds selected from the group consisting of
(A) a compound represented by the formula (I): 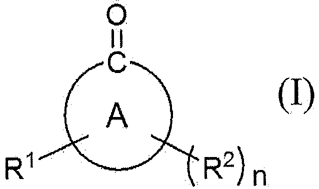 wherein
ring A is a 5-membered or 6-membered, saturated or > unsaturated, carbocycle or oxygen-containing or nitrogen-containing heterocycle;
R¹ is an oxo group, a hydroxy group, an alkoxy group having 1 - 4 carbon atoms, an acyloxy group having 1 - 4 carbon atoms, a hydrocarbon group having 1 - 8 carbon atoms and optionally having substituent(s), or a hydrogen atom, and when R¹ is a hydrocarbon group having 1 - 8 carbon atoms and optionally having substituent(s), a carbon atom in the hydrocarbon group may be bonded to a carbon atom of ring A to form a crosslinked structure or a saturated or unsaturated ring structure;
R² is a hydrocarbon group having 1 - 8 carbon atoms, a hydroxy group, or a hydrogen atom; and
n is an integer of 1 to 3,
(B) β-caryophyllene oxide, and
(C) a compound represented by the formula (II): 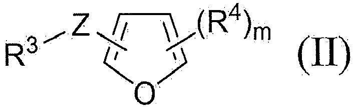 wherein
R³ is an acyl group having 1 - 6 carbon atoms, a hydroxy group, a pyrrole group, or an acyloxy group having 1 - 6 carbon atoms;
Z is a single bond or an alkylene group having 1 - 6 carbon atoms;
R⁴ is a substituent; and
m is an integer of 0 to 3.

2. The composition according to claim 1, wherein said (A) is at least one compound selected from the group consisting of cyclotene, γ-butyrolactone, 2-methyltetrahydrofuran-3-one, α-angelicalactone, maltol, 3-methyl-1,2-cyclohexanedione, γ-dodecanolactone, 5-dodecanolide, 4,5-dimethyl-3-hydroxy-2,5-dihydrofuran-2-one, and D-camphor.

3. The composition according to claim 1 or 2, wherein said (C) is at least one compound selected from the group consisting of furfural, 2-acetylfuran, 2-acetyl-5-methylfuran, 3-acetyl-2,5-dimethylfuran, furfuryl alcohol, 1-furfurylpyrrole, furfuryl propionate, 5-methylfurfural, and 5-(hydroxymethyl)furfural.

4. The composition according to any one of claims 1 to 3, wherein said at least two compounds selected from the group consisting of (A), (B), and (C) are any of the following (i) to (xviii):
(i) at least two compounds selected from the group consisting of (A) cyclotene, (B) β-caryophyllene oxide, and (C) furfural
(ii) at least two compounds selected from the group consisting of (A) γ-butyrolactone, (B) β-caryophyllene oxide, and (C) furfural
(iii) at least two compounds selected from the group consisting of (A) 2-methyltetrahydrofuran-3-one, (B) β-caryophyllene oxide, and (C) furfural
(iv) at least two compounds selected from the group consisting of (A) α-angelicalactone, (B) β-caryophyllene oxide, and (C) furfural
(v) at least two compounds selected from the group consisting of (A) maltol, (B) β-caryophyllene oxide, and (C) furfural
(vi) at least two compounds selected from the group consisting of (A) 3-methyl-1,2-cyclohexanedione, (B) β-caryophyllene oxide, and (C) furfural
(vii) at least two compounds selected from the group consisting of (A) γ-dodecanolactone, (B) β-caryophyllene oxide, and (C) furfural
(viii) at least two compounds selected from the group consisting of (A) 5-dodecanolide, (B) β-caryophyllene oxide, and (C) furfural
(ix) at least two compounds selected from the group consisting of (A) 4,5-dimethyl-3-hydroxy-2,5-dihydrofuran-2-one, (B) β-caryophyllene oxide, and (C) furfural
(x) at least two compounds selected from the group consisting of (A) D-camphor, (B) β-caryophyllene oxide, and (C) furfural
(xi) at least two compounds selected from the group consisting of (A) cyclotene, (B) β-caryophyllene oxide, and (C) 2-acetylfuran
(xii) at least two compounds selected from the group consisting of (A) cyclotene, (B) β-caryophyllene oxide, and (C) 2-acetyl-5-methylfuran
(xiii) at least two compounds selected from the group consisting of (A) cyclotene, (B) β-caryophyllene oxide, and (C) 3-acetyl-2,5-dimethylfuran
(xiv) at least two compounds selected from the group consisting of (A) cyclotene, (B) β-caryophyllene oxide, and (C) furfuryl alcohol
(xv) at least two compounds selected from the group consisting of (A) cyclotene, (B) β-caryophyllene oxide, and (C) 1-furfurylpyrrole
(xvi) at least two compounds selected from the group consisting of (A) cyclotene, (B) β-caryophyllene oxide, and (C) furfuryl propionate
(xvii) at least two compounds selected from the group consisting of (A) cyclotene, (B) β-caryophyllene oxide, and (C) 5-methylfurfural
(xviii) at least two compounds selected from the group consisting of (A) cyclotene, (B) β-caryophyllene oxide, and (C) 5-(hydroxymethyl)furfural.

5. The composition according to any one of claims 1 to 4, wherein said at least two compounds selected from the group consisting of (A), (B), and (C) are at least two compounds selected from the group consisting of (A) cyclotene, (B) β-caryophyllene oxide, and (C) furfural.

6. The composition according to any one of claims 1 to 5, wherein the composition is for enhancing a mouth-coating feel.

7. The composition according to any one of claims 1 to 6, comprising (A), (B), and (C).

8. A method for producing a food, comprising adding at least two compounds selected from the group consisting of
(A) a compound represented by the formula (I): 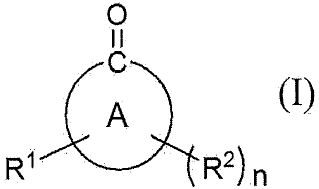 wherein
ring A is a 5-membered or 6-membered, saturated or unsaturated, carbocycle or oxygen-containing or nitrogen-containing heterocycle;
R¹ is an oxo group, a hydroxy group, an alkoxy group having 1 - 4 carbon atoms, an acyloxy group having 1 - 4 carbon atoms, a hydrocarbon group having 1 - 8 carbon atoms and optionally having substituent(s), or a hydrogen atom, and when R¹ is a hydrocarbon group having 1 - 8 carbon atoms and optionally having substituent(s), a carbon atom in the hydrocarbon group may be bonded to a carbon atom of ring A to form a crosslinked structure or a saturated or unsaturated ring structure;
R² is a hydrocarbon group having 1 - 8 carbon atoms, a hydroxy group, or a hydrogen atom; and
n is an integer of 1 to 3,
(B) β-caryophyllene oxide, and
(C) a compound represented by the formula (II): 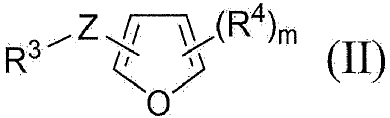 wherein
R³ is an acyl group having 1 - 6 carbon atoms, a hydroxy group, a pyrrole group, or an acyloxy group having 1 - 6 carbon atoms;
Z is a single bond or an alkylene group having 1 - 6 carbon atoms;
R⁴ is a substituent; and
m is an integer of 0 to 3.

9. The production method according to claim 8, wherein said (A) is at least one compound selected from the group consisting of cyclotene, γ-butyrolactone, 2-methyltetrahydrofuran-3-one, α-angelicalactone, maltol, 3-methyl-1,2-cyclohexanedione, γ-dodecanolactone, 5-dodecanolide, 4,5-dimethyl-3-hydroxy-2,5-dihydrofuran-2-one, and D-camphor.

10. The production method according to claim 8 or 9, wherein said (C) is at least one compound selected from the group consisting of furfural, 2-acetylfuran, 2-acetyl-5-methylfuran, 3-acetyl-2,5-dimethylfuran, furfuryl alcohol, 1-furfurylpyrrole, furfuryl propionate, 5-methylfurfural, and 5-(hydroxymethyl)furfural.

11. The production method according to any one of claims 8 to 10, wherein said at least two compounds selected from the group consisting of (A), (B), and (C) are any of the following (i) to (xviii):
(i) at least two compounds selected from the group consisting of (A) cyclotene, (B) β-caryophyllene oxide, and (C) furfural
(ii) at least two compounds selected from the group consisting of (A) γ-butyrolactone, (B) β-caryophyllene oxide, and (C) furfural
(iii) at least two compounds selected from the group consisting of (A) 2-methyltetrahydrofuran-3-one, (B) β-caryophyllene oxide, and (C) furfural
(iv) at least two compounds selected from the group consisting of (A) α-angelicalactone, (B) β-caryophyllene oxide, and (C) furfural
(v) at least two compounds selected from the group consisting of (A) maltol, (B) β-caryophyllene oxide, and (C) furfural
(vi) at least two compounds selected from the group consisting of (A) 3-methyl-1,2-cyclohexanedione, (B) β-caryophyllene oxide, and (C) furfural
(vii) at least two compounds selected from the group consisting of (A) γ-dodecanolactone, (B) β-caryophyllene oxide, and (C) furfural
(viii) at least two compounds selected from the group consisting of (A) 5-dodecanolide, (B) β-caryophyllene oxide, and (C) furfural
(ix) at least two compounds selected from the group consisting of (A) 4,5-dimethyl-3-hydroxy-2,5-dihydrofuran-2-one, (B) β-caryophyllene oxide, and (C) furfural
(x) at least two compounds selected from the group consisting of (A) D-camphor, (B) β-caryophyllene oxide, and (C) furfural
(xi) at least two compounds selected from the group consisting of (A) cyclotene, (B) β-caryophyllene oxide, and (C) 2-acetylfuran
(xii) at least two compounds selected from the group consisting of (A) cyclotene, (B) β-caryophyllene oxide, and (C) 2-acetyl-5-methylfuran
(xiii) at least two compounds selected from the group consisting of (A) cyclotene, (B) β-caryophyllene oxide, and (C) 3-acetyl-2,5-dimethylfuran
(xiv) at least two compounds selected from the group consisting of (A) cyclotene, (B) β-caryophyllene oxide, and (C) furfuryl alcohol
(xv) at least two compounds selected from the group consisting of (A) cyclotene, (B) β-caryophyllene oxide, and (C) 1-furfurylpyrrole
(xvi) at least two compounds selected from the group consisting of (A) cyclotene, (B) β-caryophyllene oxide, and (C) furfuryl propionate
(xvii) at least two compounds selected from the group consisting of (A) cyclotene, (B) β-caryophyllene oxide, and (C) 5-methylfurfural
(xviii) at least two compounds selected from the group consisting of (A) cyclotene, (B) β-caryophyllene oxide, and (C) 5-(hydroxymethyl)furfural.

12. The production method according to any one of claims 8 to 11, wherein said at least two compounds selected from the group consisting of (A), (B), and (C) are at least two compounds selected from the group consisting of (A) cyclotene, (B) β-caryophyllene oxide, and (C) furfural.

13. The production method according to any one of claims 8 to 12, wherein the food is a food with an enhanced mouth-coating feel.

14. The production method according to any one of claims 8 to 13, comprising adding (A), (B), and (C).

15. A food comprising at least two compounds selected from the group consisting of
(A) a compound represented by the formula (I): 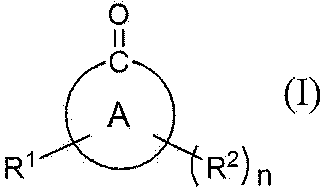 wherein
ring A is a 5-membered or 6-membered, saturated or unsaturated, carbocycle or oxygen-containing or nitrogen-containing heterocycle;
R¹ is an oxo group, a hydroxy group, an alkoxy group having 1 - 4 carbon atoms, an acyloxy group having 1 - 4 carbon atoms, a hydrocarbon group having 1 - 8 carbon atoms and optionally having substituent(s), or a hydrogen atom, and when R¹ is a hydrocarbon group having 1 - 8 carbon atoms and optionally having substituent(s), a carbon atom in the hydrocarbon group may be bonded to a carbon atom of ring A to form a crosslinked structure or a saturated or unsaturated ring structure;
R² is a hydrocarbon group having 1 - 8 carbon atoms, a hydroxy group, or a hydrogen atom; and
n is an integer of 1 to 3,
(B) β-caryophyllene oxide, and
(C) a compound represented by the formula (II): 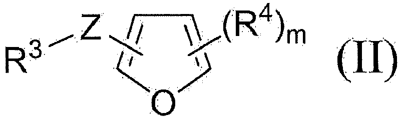 wherein
R³ is an acyl group having 1 - 6 carbon atoms, a hydroxy group, a pyrrole group, or an acyloxy group having 1 - 6 carbon atoms;
Z is a single bond or an alkylene group having 1 - 6 carbon atoms;
R⁴ is a substituent; and
m is an integer of 0 to 3.

16. The food according to claim 15, wherein said (A) is at least one compound selected from the group consisting of cyclotene, γ-butyrolactone, 2-methyltetrahydrofuran-3-one, α-angelicalactone, maltol, 3-methyl-1,2-cyclohexanedione, γ-dodecanolactone, 5-dodecanolide, 4,5-dimethyl-3-hydroxy-2,5-dihydrofuran-2-one, and D-camphor.

17. The food according to claim 15 or 16, wherein said (C) is at least one compound selected from the group consisting of furfural, 2-acetylfuran, 2-acetyl-5-methylfuran, 3-acetyl-2,5-dimethylfuran, furfuryl alcohol, 1-furfurylpyrrole, furfuryl propionate, 5-methylfurfural, and 5-(hydroxymethyl)furfural.

18. The food according to any one of claims 15 to 17, comprising any of the following (i) to (xviii) as (A), (B), and (C):
(i) at least two compounds selected from the group consisting of (A) cyclotene, (B) β-caryophyllene oxide, and (C) furfural
(ii) at least two compounds selected from the group consisting of (A) γ-butyrolactone, (B) β-caryophyllene oxide, and (C) furfural
(iii) at least two compounds selected from the group consisting of (A) 2-methyltetrahydrofuran-3-one, (B) β-caryophyllene oxide, and (C) furfural
(iv) at least two compounds selected from the group consisting of (A) α-angelicalactone, (B) β-caryophyllene oxide, and (C) furfural
(v) at least two compounds selected from the group consisting of (A) maltol, (B) β-caryophyllene oxide, and (C) furfural
(vi) at least two compounds selected from the group consisting of (A) 3-methyl-1,2-cyclohexanedione, (B) β-caryophyllene oxide, and (C) furfural
(vii) at least two compounds selected from the group consisting of (A) γ-dodecanolactone, (B) β-caryophyllene oxide, and (C) furfural
(viii) at least two compounds selected from the group consisting of (A) 5-dodecanolide, (B) β-caryophyllene oxide, and (C) furfural
(ix) at least two compounds selected from the group consisting of (A) 4,5-dimethyl-3-hydroxy-2,5-dihydrofuran-2-one, (B) β-caryophyllene oxide, and (C) furfural
(x) at least two compounds selected from the group consisting of (A) D-camphor, (B) β-caryophyllene oxide, and (C) furfural
(xi) at least two compounds selected from the group consisting of (A) cyclotene, (B) β-caryophyllene oxide, and (C) 2-acetylfuran
(xii) at least two compounds selected from the group consisting of (A) cyclotene, (B) β-caryophyllene oxide, and (C) 2-acetyl-5-methylfuran
(xiii) at least two compounds selected from the group consisting of (A) cyclotene, (B) β-caryophyllene oxide, and (C) 3-acetyl-2,5-dimethylfuran
(xiv) at least two compounds selected from the group consisting of (A) cyclotene, (B) β-caryophyllene oxide, and (C) furfuryl alcohol
(xv) at least two compounds selected from the group consisting of (A) cyclotene, (B) β-caryophyllene oxide, and (C) 1-furfurylpyrrole
(xvi) at least two compounds selected from the group consisting of (A) cyclotene, (B) β-caryophyllene oxide, and (C) furfuryl propionate
(xvii) at least two compounds selected from the group consisting of (A) cyclotene, (B) β-caryophyllene oxide, and (C) 5-methylfurfural
(xviii) at least two compounds selected from the group consisting of (A) cyclotene, (B) β-caryophyllene oxide, and (C) 5-(hydroxymethyl)furfural.

19. The food according to any one of claims 15 to 18, comprising at least two compounds selected from the group consisting of (A) cyclotene, (B) β-caryophyllene oxide, and (C) furfural.

20. The food according to any one of claims 15 to 19, wherein the food has an enhanced mouth-coating feel.

21. The food according to any one of claims 15 to 20, comprising (A), (B), and (C).

22. A method for enhancing a mouth-coating feel, comprising adding to a food at least two compounds selected from the group consisting of
(A) a compound represented by the formula (I): 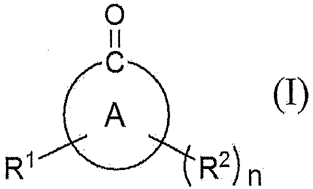 wherein
ring A is a 5-membered or 6-membered, saturated or unsaturated, carbocycle or oxygen-containing or nitrogen-containing heterocycle;
R¹ is an oxo group, a hydroxy group, an alkoxy group having 1 - 4 carbon atoms, an acyloxy group having 1 - 4 carbon atoms, a hydrocarbon group having 1 - 8 carbon atoms and optionally having substituent(s), or a hydrogen atom, and when R¹ is a hydrocarbon group having 1 - 8 carbon atoms and optionally having substituent(s), a carbon atom in the hydrocarbon group may be bonded to a carbon atom of ring A to form a crosslinked structure or a saturated or unsaturated ring structure;
R² is a hydrocarbon group having 1 - 8 carbon atoms, a hydroxy group, or a hydrogen atom; and
n is an integer of 1 to 3,
(B) β-caryophyllene oxide, and
(C) a compound represented by the formula (II): 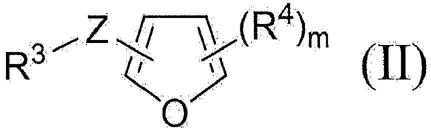 wherein
R³ is an acyl group having 1 - 6 carbon atoms, a hydroxy group, a pyrrole group, or an acyloxy group having 1 - 6 carbon atoms;
Z is a single bond or an alkylene group having 1 - 6 carbon atoms;
R⁴ is a substituent; and
m is an integer of 0 to 3.

23. The enhancing method according to claim 22, wherein said (A) is at least one compound selected from the group consisting of cyclotene, γ-butyrolactone, 2-methyltetrahydrofuran-3-one, α-angelicalactone, maltol, 3-methyl-1,2-cyclohexanedione, γ-dodecanolactone, 5-dodecanolide, 4,5-dimethyl-3-hydroxy-2,5-dihydrofuran-2-one, and D-camphor.

24. The enhancing method according to claim 22 or 23, wherein said (C) is at least one compound selected from the group consisting of furfural, 2-acetylfuran, 2-acetyl-5-methylfuran, 3-acetyl-2,5-dimethylfuran, furfuryl alcohol, 1-furfurylpyrrole, furfuryl propionate, 5-methylfurfural, and 5-(hydroxymethyl) furfural.

25. The enhancing method according to any one of claims 22 to 24, wherein said at least two compounds selected from the group consisting of (A), (B), and (C) are any of the following (i) to (xviii):
(i) at least two compounds selected from the group consisting of (A) cyclotene, (B) β-caryophyllene oxide, and (C) furfural
(ii) at least two compounds selected from the group consisting of (A) γ-butyrolactone, (B) β-caryophyllene oxide, and (C) furfural
(iii) at least two compounds selected from the group consisting of (A) 2-methyltetrahydrofuran-3-one, (B) β-caryophyllene oxide, and (C) furfural
(iv) at least two compounds selected from the group consisting of (A) α-angelicalactone, (B) β-caryophyllene oxide, and (C) furfural
(v) at least two compounds selected from the group consisting of (A) maltol, (B) β-caryophyllene oxide, and (C) furfural
(vi) at least two compounds selected from the group consisting of (A) 3-methyl-1,2-cyclohexanedione, (B) β-caryophyllene oxide, and (C) furfural
(vii) at least two compounds selected from the group consisting of (A) γ-dodecanolactone, (B) β-caryophyllene oxide, and (C) furfural
(viii) at least two compounds selected from the group consisting of (A) 5-dodecanolide, (B) β-caryophyllene oxide, and (C) furfural
(ix) at least two compounds selected from the group consisting of (A) 4,5-dimethyl-3-hydroxy-2,5-dihydrofuran-2-one, (B) β-caryophyllene oxide, and (C) furfural
(x) at least two compounds selected from the group consisting of (A) D-camphor, (B) β-caryophyllene oxide, and (C) furfural
(xi) at least two compounds selected from the group consisting of (A) cyclotene, (B) β-caryophyllene oxide, and (C) 2-acetylfuran
(xii) at least two compounds selected from the group consisting of (A) cyclotene, (B) β-caryophyllene oxide, and (C) 2-acetyl-5-methylfuran
(xiii) at least two compounds selected from the group consisting of (A) cyclotene, (B) β-caryophyllene oxide, and (C) 3-acetyl-2,5-dimethylfuran
(xiv) at least two compounds selected from the group consisting of (A) cyclotene, (B) β-caryophyllene oxide, and (C) furfuryl alcohol
(xv) at least two compounds selected from the group consisting of (A) cyclotene, (B) β-caryophyllene oxide, and (C) 1-furfurylpyrrole
(xvi) at least two compounds selected from the group consisting of (A) cyclotene, (B) β-caryophyllene oxide, and (C) furfuryl propionate
(xvii) at least two compounds selected from the group consisting of (A) cyclotene, (B) β-caryophyllene oxide, and (C) 5-methylfurfural
(xviii) at least two compounds selected from the group consisting of (A) cyclotene, (B) β-caryophyllene oxide, and (C) 5-(hydroxymethyl)furfural.

26. The enhancing method according to any one of claims 22 to 25, wherein said at least two compounds selected from the group consisting of (A), (B), and (C) are at least two compounds selected from the group consisting of (A) cyclotene, (B) β-caryophyllene oxide, and (C) furfural.

27. The enhancing method according to any one of claims 22 to 26, wherein the method comprises adding (A), (B), and (C).
